(19) **Europäisches Patentamt European Patent Office Office européen des brevets**

(11) **EP 2 348 091 B1**

(12) **FASCICULE DE BREVET EUROPEEN**

(45) Date de publication et mention de la délivrance du brevet:
**05.12.2012 Bulletin 2012/49**

(51) Int Cl.:
*C10G 1/08* *(2006.01)*  *C10G 3/00* *(2006.01)*
*B01J 23/755* *(2006.01)*  *B01J 23/883* *(2006.01)*
*B01J 23/40* *(2006.01)*  *C10L 1/02* *(2006.01)*

(21) Numéro de dépôt: **10290672.4**

(22) Date de dépôt: **22.12.2010**

(54) **Procédé d'hydroliquéfaction directe de biomasse comprenant deux etapes d'hydroconversion en lit bouillonnant**

Verfahren zur direkten hydrierenden Verflüssigung von Biomasse beinhaltend zwei Wasserstoffumwandlungen in einem wallenden Bett

Direct biomass hydroliquefaction process comprising two ebullated bed hydroconversion steps

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.01.2010 FR 1000097**
**11.02.2010 FR 1000574**

(43) Date de publication de la demande:
**27.07.2011 Bulletin 2011/30**

(73) Titulaire: **IFP Energies nouvelles**
**92852 Rueil-Malmaison Cedex (FR)**

(72) Inventeurs:
• **Quignard, Alain**
**38150 Roussillon (FR)**
• **Weiss, Wilfried**
**69007 Lyon (FR)**

(56) Documents cités:
**WO-A1-2009/039333 WO-A1-2010/002886**
**DE-A1- 3 611 340 GB-A- 528 268**
**GB-A- 1 165 141 US-A- 2 220 624**
**US-A- 4 618 736 US-A1- 2008 308 457**
**US-A1- 2009 218 061**

**Description**

La présente invention concerne un procédé d'hydroliquéfaction directe de biomasse choisie parmi les algues, la biomasse lignocellulosique et/ou un ou plusieurs constituants de biomasse lignocellulosique choisis dans le groupe formé par la cellulose, l'hémicellulose et/ou la lignine pour produire des bases carburants. Plus particulièrement, l'invention concerne un procédé comportant deux étapes d'hydroconversion successives employant une technologie en lit bouillonnant sous haute pression d'hydrogène.

Depuis quelques d'années, il existe un vif regain d'intérêt pour l'incorporation de produits d'origines renouvelables au sein des filières carburant et chimie, en complément ou en substitution des produits d'origine fossile. Une voie possible est la conversion de la biomasse lignocellulosique ou d'algues en bases carburants.

La biomasse lignocellulosique est essentiellement constituée de trois polymères naturels : la cellulose, l'hémicellulose et la lignine. La cellulose et l'hémicellulose sont essentiellement composées de polymères de sucres (hexoses et pentoses).La lignine est essentiellement composée de polymères réticulés comportant des motifs élémentaires de type propyl-méthoxy-phénols.

Dans le cadre de la production de biocarburants à partir d'algues, on distingue les macroalgues et les microalgues. On entend par macroalgues les grandes algues ou algues géantes qui sont fixées sur un substrat rocheux, à l'exception des sargasses de la mer qui flottent sans être accrochées. Les macroalgues sont essentiellement constituées de protéines et de polysaccharides, comme les alginates ou l'acide alginique et de minéraux. Le terme microalgues est utilisé pour désigner les algues microscopiques au sens strict (diatomées, chlorophycées etc...) et les cyanobactéries. Unicellulaires ou pluricellulaires indifférenciées, ce sont des micro-organismes vivant dans les milieux fortement aqueux et pouvant posséder une mobilité flagellaire. Les microalgues sont essentiellement constituées de protéines, de lipides, de polysaccharides et de fibres.

Par souci de simplification, le terme biomasse utilisé par la suite englobe les algues, la biomasse lignocellulosique ou un ou plusieurs constituants de biomasse lignocellulosique choisi dans le groupe formé par la cellulose, l'hémicellulose et/ou la lignine.

La biomasse possède une composition élémentaire riche en carbone et en oxygène mais relativement pauvre en hydrogène. Pour produire des bases carburants à partir de biomasse, il faut donc d'une manière générale, abaisser la teneur en oxygène et augmenter la teneur en hydrogène et/ou réduire la teneur en carbone. La biomasse contient également d'autres hétéroatomes (soufre, azote...) et des composés inorganiques de natures variées (alcalin, métaux de transition, halogène...).

Il existe différentes méthodes de conversion de biomasse. Une méthode de transformation de la biomasse est la gazéification suivie de la fabrication d'un carburant à partir du gaz de synthèse. Une autre méthode de transformation est la liquéfaction telles que, par exemple, la pyrolyse rapide ou la conversion hydrothermale, avec ou sans catalyseur, mais sans ajout d'hydrogène. Toutefois, ces procédés conduisent à des bio-huiles encore très riches en oxygène, qui sont thermiquement peu ou pas stables et qui présentent des propriétés physico-chimiques encore très éloignées de celles requises pour les produits finaux et nécessitent donc des traitements ultérieurs. De plus, ces procédés purement thermiques, ont par essence une très mauvaise sélectivité et ces réactions peuvent s'accompagner d'une production importante de gaz et de solides.

Une nouvelle solution de liquéfaction de la biomasse potentiellement attractive consiste à la liquéfier à l'aide d'un procédé catalytique en présence d'hydrogène et d'un solvant, de préférence un solvant donneur d'hydrogène. Cette voie permet une incorporation directe notable d'hydrogène. Le principe de l'hydroliquéfaction directe consiste donc à mettre en contact la biomasse avec un solvant pouvant présenter un caractère donneur d'hydrogène, et de choisir les différents paramètres opératoires que sont le ratio solvant/charge, la température, la pression totale, la pression partielle en gaz réducteur, la présence de catalyseur pour produire un liquide organique présentant une teneur en oxygène réduite et un ratio molaire H/C proche de celui des hydrocarbures. L'hydroliquéfaction catalytique est d'autant plus aisée que la teneur en eau de la biomasse est faible et à l'état de particules divisées d'où l'intérêt des opérations de séchage et/ou broyage et/ou torréfaction et/ou de déminéralisation.

Une application intéressante est l'hydroliquéfaction de la lignine, car ce constituant de la biomasse lignocellulosique n'est actuellement valorisé, quand il est séparé, que comme combustible.

Lors de l'hydroliquéfaction directe de la biomasse, les réactions dans le ou les réacteurs sont les suivantes:

- les réactions de déoxygénation qui se décomposent en :
- la réaction de décarbonylation qui représente l'ensemble des réactions permettant d'enlever un atome d'oxygène et un atome de carbone d'un groupement carboxylique en formant du monoxyde de carbone (CO),
- la réaction de décarboxylation qui représente l'ensemble des réactions permettant d'enlever un groupement carboxyle d'un groupement carboxylique en formant du dioxyde de carbone ($CO_2$),
- la réaction d'hydrodéoxygénation (HDO) qui correspond aux réactions permettant d'enlever de l'oxygène de la charge et aboutissant à la formation d'eau en présence d'hydrogène,

- la réaction d'hydrodésulfuration (HDS), par laquelle on désigne les réactions permettant d'enlever du soufre de la charge avec production d'H2S,
- la réaction d'hydrodéazotation (HDN), par laquelle on désigne les réactions permettant d'enlever l'azote de la charge avec production de NH3,
- la réaction d'hydrogénation des insaturations et/ou des noyaux aromatiques (HDol, HDA),
- plus généralement toutes les réactions d'hydrotraitement (HDT),
- les réactions d'hydrocraquage qui conduisent à l'ouverture de cycle naphté-nique ou le fractionnement de paraffines en plusieurs fragments de plus faible poids moléculaire (HCK),
- les réactions de craquage thermique et de polycondensation (formation de coke) bien que ces dernières ne soient pas désirées,
- des réactions de water gas shift conversion : CO+ H2O $\rightarrow$CO2 +H2.
- des réactions de méthanation : CO + 3 H2 $\rightarrow$CH4 + H2O

Toutes les réactions utilisant l'hydrogène peuvent être basées sur l'hydrogène moléculaire comme sur des réactions de transfert d'atome d'hydrogène entre le solvant donneur d'hydrogène ou les produits de conversion (puisque le solvant donneur peut provenir de certaines familles de produits de conversion recyclés)et les réactifs.

Les catalyseurs utilisés pour l'hydroliquéfaction de la biomasse sont de préférence des catalyseurs connus pour l'hydroconversion des résidus de l'industrie du pétrole. On entend par hydroconversion des réactions d'hydrotraitement et/ou d'hydrocraquage.

Depuis la première crise du pétrole des années soixante-dix du siècle dernier, l'hydroliquéfaction directe de la biomasse est apparue comme une voie potentielle pour la production de carburants et/ou de produits chimiques.

Ainsi, le brevet US4420644 décrit un procédé de liquéfaction de la lignine pour produire des phénols dans un réacteur en lit bouillonnant et opérant à des pressions de 500 à 2500 psig (3,4 MPa - 17,2 MPa). L'effluent liquide de la liquéfaction subi ensuite une étape d'hydroalkylation afin d'augmenter le rendement en phénols. La demande de brevet CA851708 du même déposant décrit un procédé de liquéfaction de la lignine dans un réacteur en lit bouillonnant pour produire des phénols et opérant à des pressions de 250 à 1800 psig (1,7 MPa -12,4 MPa). Cette demande décrit la possibilité de réacteurs en série sans pour autant donner des précisions sur les conditions opératoires des différentes étapes.

Plus récemment, la demande US2008/0076945 décrit un procédé d'hydroliquéfaction de lignine et de déchets cellulosiques en produits carburants (diesel et naphtha) en une seule étape et opérant à des pressions relativement modérées de 3,4 MPa à 14 MPa. Les demandes US2009/0218061 et US2009/0218062 divulguent un procédé d'hydroliquéfaction de la lignine et/ou de liqueurs noires en biocarburants opérant à une pression de 2000 psig (13,8 MPa). Un procédé multi-étapes est décrit dans le cas d'une charge de liqueurs noires, la première étape d'hydroconversion réalisant essentiellement la séparation de la lignine de l'eau et des sels contenus dans la liqueur.

La demande DE3611340 divulgue un procédé d'hydroliquéfaction de biomasse lignocellulosique en présence d'une huile recyclée du procédé et d'un catalyseur hétérogène métallique à 300-400°C et à 35-250 bar d'hydrogène.

Suzuki et al(Fuel Vol. 76, No. 11, pp. 1043-1048, 1997) décrivent l'hydroliquéfaction de microalgues avec un catalyseur de fer sulfurisés Fe(CO)$_5$-S en autoclave à une température entre 300°C et 425°Cet à une pression de 5 MPa d'hydrogène. Les mêmes auteurs décrivent également la cohydroliquéfaction de microalgues avec du charbon utilisant des catalyseurs de fer, molybdène ou de cobalt non supportés en autoclave à une température entre 300 et 400°C et une pression de 5 MPa (Energy &Fuels 2001, 15, 350-355).

Chin L.-Y. (Chin L.-Y., "Fuels by algae hydrogenation (1979) Ph.D. thesis at the Pennsylvania State University) décrit l'hydroliquéfaction de microalgues (Chlorella pyrenoidosa) dans un réacteur slurry en présence d'un catalyseur cobalt molybdène à une température entre 340°C et 430°C et une pression entre 7 et 15 MPa. Les technologies d'hydroconversion en réacteur slurry utilisent un catalyseur dispersé sous forme de très petites particules. Les catalyseurs, ou leurs précurseurs, sont injectés avec la charge à convertir à l'entrée du réacteur, traversent le réacteur avec les charges et les produits en cours de conversion, puis sont entraînés avec les produits de réaction hors du réacteur. L'utilisation d'un réacteur slurry nécessite alors la séparation du catalyseur de l'effluent. Ainsi, les procédés en slurry souffrent d'une opérabilité difficile.

L'enjeu pour le développement industriel de l'hydroliquéfaction est d'obtenir des biocarburants avec un rendement élevé et des qualités acceptables vis-à-vis des spécifications finales et/ou des contraintes liées aux étapes postérieures de transformation.

La présente invention concerne un procédé d'hydroliquéfaction directe de biomasse pour produire des bases carburants comportant deux étapes d'hydroconversion successives employant une technologie en lit bouillonnant sous haute pression d'hydrogène.

Plus particulièrement, la présente invention concerne un procédé d'hydroliquéfaction de biomasse choisie parmi les algues, la biomasse lignocellulosique et/ou un ou plusieurs constituants de biomasse lignocellulosique choisis dans le groupe formé par la cellulose, l'hémicellulose et/ou la lignine pour produire des bases carburants comportant

a) une étape de constitution d'une suspension des particules de biomasse dans un solvant, de préférence un solvant donneur d'hydrogène,

b) une première étape d'hydroconversion en présence d'hydrogène de ladite suspension dans au moins un réacteur contenant un catalyseur en lit bouillonnant et opérant à une température comprise entre 300°C et 440°C, de préférence entre 325°C et 375°C, à une pression totale comprise entre 15 et 25 MPa, de préférence comprise entre 16 et 20 MPa, à une vitesse massique horaire ((t de charge/h)/t de catalyseur) comprise entre 0,1 et 5 h$^{-1}$et à un rapport hydrogène/charge compris entre 0.1 et 2 Nm$^3$/kg,

c) une deuxième étape d'hydroconversion en présence d'hydrogène d'une partie au moins de l'effluent obtenu dans l'étape b) dans au moins un réacteur contenant un catalyseur en lit bouillonnant et opérant à une température comprise entre 350°C et 470°C, de préférence comprise entre 350°C et 425°C à une pression totale comprise entre 15 et 25 MPa, de préférence comprise entre 16 et 20 MPa, à une vitesse massique horaire ((t de charge/h)/t de catalyseur) comprise entre 0,1 et 5 h$^{-1}$ et à un rapport hydrogène/charge compris entre 0.1 et 2 Nm$^3$/kg,

et dans lequel, la température de la deuxième étape d'hydroconversion est au moins de 10°C plus élevée que celle de la première étape d'hydroconversion.

Plus particulièrement, l'invention concerne un procédé d'hydroliquéfaction directe de biomasse comportant deux étapes d'hydroconversion successives sous haute pression d'hydrogène dans des réacteurs à lit bouillonnant. La biomasse lignocellulosique subit de préférence un prétraitement de séchage et/ou torréfaction et/ou de broyage avant l'hydroliquéfaction. Les algues subissent de préférence un prétraitement de déminéralisation et/ou de séchage et/ou de broyage. La première étape d'hydroconversion (1) se fait en présence d'un catalyseur supporté de type hydroconversion de résidu pétrolier et d'une suspension composée de la biomasse et d'un solvant, de préférence un solvant donneur d'hydrogène. Ledit solvant est de préférence une coupe recyclée issue du procédé et contient avantageusement une coupe de type gazole sous vide. Le solvant joue un triple rôle : mise en suspension en slurry de la charge en amont de la zone réactionnelle, permettant ainsi son transport vers cette dernière, puis solubilisation partielle des produits primaires de conversions et transfert d'hydrogène vers ces produits primaires pour permettre une conversion en liquide en minimisant la quantité de solides et de gaz formés dans la dite zone réactionnelle.

La deuxième étape d'hydroconversion (2) se fait également en présence d'un catalyseur supporté de type hydroconversion de résidu pétrolier et avec au moins une partie de l'effluent de l'étape (1). La température du réacteur de l'étape (1) est moins élevée que celle du réacteur de l'étape (2) ce qui favorise l'hydrogénation du solvant. Ainsi l'hydroconversion dans le réacteur de l'étape (2) est plus poussée. A l'issue des deux étapes d'hydroconversion, l'effluent est généralement soumis à une étape de séparation pour récupérer les bases carburants désirées. Cette étape de séparation peut comporter une ou plusieurs opération(s) unitaire(s) telle(s) qu'un séparateur gaz/liquide, une distillation atmosphérique, une distillation sous vide, une extraction liquide/liquide,une filtration, une centrifugation. Ces opérations unitaires peuvent être réalisées sur un ou plusieurs flux issu(s) des étapes d'hydroconversion et/ou d'opération(s) unitaire(s) de séparation située(s) en amont.

Les produits obtenus par l'hydroliquéfaction de la biomasse, après une séparation optionnelle, sont des gaz légers (C1-C4, $CO_2$,CO, $H_2O$, $H_2S$, $NH_3$,...), une phase aqueuse pouvant contenir des composés oxygénés (notamment des phénols), des hydrocarbures liquides de type naphta, kérosène et diesel, une fraction lourde de type gazole sous vide servant de préférence au moins partiellement comme solvant pour la liquéfaction et une fraction résiduelle.

Il a maintenant été trouvé que le procédé d'hydroliquéfaction de la présente invention, intégrant une technologie en lit bouillonnant en deux étapes fonctionnant à des températures différentes et travaillant sous forte pression d'hydrogène, fait qu'il devienne possible d'atteindre des niveaux de conversion en biocarburants remarquables. Les liquéfiats obtenus sont de bonne qualité avec une teneur en oxygène généralement comprise entre 0.1 et 5% en fonction de la sévérité du traitement. En effet, la forte pression d'hydrogène permet d'atteindre une meilleure déoxygénation de la biomasse qui permet, par exemple, de diminuer la production de phénols et d'augmenter la conversion et la qualité de biocarburants obtenus.

Le fait d'utiliser la technologie en lit bouillonnant permet de travailler à des conditions opératoires constantes et d'obtenir des rendements et des qualités de produits constants le long du cycle. La mise en oeuvre de l'hydroliquéfaction en lit bouillonnant permet de s'affranchir des problèmes de contamination du catalyseur liées à la formation d'eau et d'oxydes de carbone par les réactions d'hydrodéoxygénation et aux dépôts d'impuretés présentes naturellement dans la biomasse lignocellulosique. Le lit bouillonnant permet également une opération quasi isotherme ce qui représente un avantage pour des réactions fortement exothermiques telle que l'hydrodéoxygénation. De même, le catalyseur restant dans le réacteur, on ne rencontre pas le problème de séparation du catalyseur de l'effluent après l'hydroconversion comme pour un réacteur slurry. En effet, les technologies d'hydroconversion en réacteur slurry utilisent un catalyseur dispersé sous forme de très petites particules, dont la taille est de quelques dizaines de microns ou moins (généralement 0.001 à 100 μm).Les catalyseurs, ou leurs précurseurs, sont injectés avec la charge à convertir à l'entrée des réacteurs.

Les catalyseurs traversent les réacteurs avec les charges et les produits en cours de conversion, puis ils sont entraînés avec les produits de réaction hors des réacteurs. On les retrouve après séparation dans la fraction résiduelle lourde.

La technologie du lit bouillonnant permet également d'effectuer la conversion de la biomasse en co-traitement avec d'autres charges. Ces charges peuvent être de nature hydrocarbonée (pétrolière), de nature non pétrolière, comme les charbons, les déchets industriels ou les déchets organiques ménagers ou industriels, ou encore de nature renouvelable comme les huiles et graisses d'origine végétale ou animale. Un avantage du co-traitement est la valorisation en bases carburants de charges souvent considérées comme déchets.

Le fait d'utiliser deux réacteurs en lit bouillonnant permet d'avoir une opérabilité améliorée au niveau de la flexibilité des conditions opératoires et du système catalytique. Les différentes possibilités du traitement des catalyseurs usagés décrites ci-dessous par régénération et/ou réjuvénation et/ou cascading permettent d'augmenter la durée de vie des catalyseurs ainsi que les durées de cycle de l'ensemble du procédé.

Les différentes conditions opératoires en terme de température dans les deux étapes d'hydroconversion sont sélectionnées pour pouvoir contrôler l'hydrogénation et la conversion de la biomasse en produits souhaités dans chaque réacteur et de convertir simultanément la biomasse, le solvant recyclé et les liquides dérivées de la biomasse lors de l'hydroliquéfaction. Les différentes conditions opératoires permettent ainsi l'optimisation de l'utilisation de l'hydrogène. La température plus basse dans le premier réacteur d'hydroconversion limite la formation de coke et les réactions de polymérisation tout en favorisant l'hydrogénation du solvant. L'hydrogénation du solvant facilite le transfert d'hydrogène entre le solvant et la biomasse et/ou les produits de conversion tout au long de l'hydroconversion. La température plus élevée dans le deuxième réacteur d'hydroconversion permet de convertir la biomasse non encore convertie. C'est donc le choix de ces différentes conditions opératoires couplées avec l'utilisation d'un procédé à deux étapes d'hydroconversion qui permet la production de bases carburants avec un bon rendement et un excellent taux de déoxygénation, ce qui se reflète dans la bonne qualité des carburants.

Un autre avantage de la présente invention se situe dans le pré-traitement optionnel de la biomasse qui permet la préparation optimale de la biomasse en termes de taux d'humidité et de taille de particules pour son hydroliquéfaction. Le prétraitement de la biomasse lignocellulosique ou d'un de ses constituants peut comprendre une étape de séchage et/ou de torréfaction et/ou de broyage. Le séchage consiste à diminuer la teneur en eau de la charge, permettant ainsi un broyage à moindre coût énergétique. La torréfaction permet une diminution supplémentaire de la teneur en eau et une modification de la structure de la biomasse permettant un broyage à un coût énergétique plus faible que pour une charge uniquement séchée. L'étape de broyage peut également intervenir après le séchage et être éventuellement complétée par un broyage complémentaire après la torréfaction. Le pré-traitement des algues peut comprendre une étape de déminéralisation et/ou de séchage et/ou de broyage. La déminéralisation consiste à diminuer la teneur en impuretés, notamment en sels inorganiques et en métaux.

## Description détaillée

La présente invention concerne un procédé d'hydroliquéfaction directe de biomasse, seule ou en mélange, pour produire des bases carburants. Plus particulièrement, l'invention concerne un procédé comportant deux étapes d'hydroconversion successives employant une technologie en lit bouillonnant sous haute pression d'hydrogène.

## La charge biomasse

La charge biomasse est choisie parmi les algues, la biomasse lignocellulosique et un ou plusieurs constituants de biomasse lignocellulosique choisis dans le groupe formé par la cellulose, l'hémicellulose et/ou la lignine.

Par biomasse lignocellulosique, on entend des charges riches en cellulose et/ou hemi-cellulose et/ou lignine. Un seul des constituants de cette biomasse lignocellulosique peut être extrait pour l'hydroliquéfaction. Cet extrait ou l'autre fraction restante peut également constituer une charge utilisable dans l'invention, en particulier la lignine.

La matière première lignocellulosique peut être est constituée de bois ou de déchets végétaux. D'autres exemples non limitatifs de matière biomasse lignocellulosique sont les résidus d'exploitation agricole (paille...), les résidus d'exploitation forestière (produits de première éclaircie),les produits d'exploitation forestière, les cultures dédiées (taillis à courte rotation), les résidus de l'industrie agro-alimentaire, les déchets organiques ménagers, les déchets des installations de transformation du bois, les bois usagés de construction, du papier, recyclé ou non.

La biomasse lignocellulosique peut aussi provenir de sous-produits de l'industrie papetière comme la lignine Kraft, ou les liqueurs noires issues de la fabrication de pâte à papier.

Les algues utilisables dans l'hydroliquéfaction des algues sont des macroalgues et/ou microalgues. Ainsi, la charge peut être constituée d'organismes procaryotes tels que les algues bleues ou cyanobactéries, ou d'organismes eurocaryotes comme des groupes à espèces unicellulaires (Euglénophytes, Cryptophytes, Haptophytes, Glaucophytes, etc...), des groupes à espèces unicellulaires ou pluricellulaires comme les algues rouges ou Rhodophyta, et Stramenopiles regroupant notamment les Diatomées et les algues brunes ou Phéophycées. Enfin la charge peut également être constituée de macroalgues comme les algues vertes (provoquant les marées vertes), les laminaires ou le goémon (aussi appeler le varech). D'une manière générale, les algues peuvent contenir de l'eau, des protéines, des acides aminées, des saccharides, des lipides, des tanins, des polyphénols, des polyphloroglucinols, des antioxydants et des composés inorganiques.

La technologie du lit bouillonnant permet également d'effectuer la conversion de la biomasse en co-traitement avec d'autres charges difficiles à convertir dans les procédés d'hydrotraitement/hydroconversion en lit fixe. Ces charges peuvent être de nature hydrocarbonée (pétrolière), de nature non pétrolière ou de nature renouvelable.

Les charges hydrocarbonées (pétrolières) concernées sont des charges telles que des résidus pétroliers, des pétroles bruts, des bruts synthétiques, des pétroles bruts étêtés, des huiles désasphaltées, des résines de désasphaltage, des asphaltes de désasphaltage, des dérivés de procédés de conversion du pétrole (comme par exemple : LCO, HCO, slurry de FCC, GO lourd/VGOde coking, résidu de viscoréduction ou procédé thermique similaires, etc....), des sables bitumineux ou leurs dérivés, des schistes bitumineux ou leurs dérivés, ou des mélanges de telles charges.

Les charges non pétrolières concernées sont des charges telles que des charbons ou des déchets hydrocarbonés et/ou polymères industriels comme par exemple les polymères recyclés des pneus usés, des résidus usagés de polymères provenant par exemple de véhicules automobiles recyclés, les déchets organiques ou plastiques ménagers, ou des mélanges de telles charges.

Les charges constituées d'au moins une partie des effluents issus de synthèse Fischer Tropsch, réalisée à partir de gaz de synthèse produits par gazéification de charges de type pétrolières, non pétrolières (charbon, gaz) ou renouvelables (biomasse), peuvent également subir un co-traitement de conversion avec de la biomasse lignocellulosique dans une technologie de type lit bouillonnant. Les goudrons et résidus non ou difficilement valorisables issus de ladite gazéification peuvent aussi être utilisé comme charge de co-traitement.

On peut également traiter la biomasse lignocellulosique avec des charges issues d'autres sources renouvelables comme par exemple les huiles et graisses d'origine végétale ou animale, ou des mélanges de telles charges, contenant des triglycérides et/ou des acides gras libres et/ou des esters. Les huiles végétales peuvent avantageusement être brutes ou raffinées, totalement ou en partie, et issues des végétaux suivants : colza, tournesol, soja, palme, palmiste, olive, noix de coco, jatropha, cette liste n'étant pas limitative. Les huiles d'algues ou de poisson sont également pertinentes. Les huiles peuvent également être produites à partir d'organisme génétiquement modifiés. Les graisses animales sont avantageusement choisies parmi le lard ou les graisses composées de résidus de l'industrie alimentaire ou issus des industries de la restauration. Tous produits ou mélange de produits issus de la conversion thermochimique de la biomasse, comme par exemple le charbon de bois ou l'huile de pyrolyse présentent également des charges utilisables.

Prétraitement

La présente invention comprend de préférence un prétraitement de la biomasse en vue de son traitement ultérieur dans les réacteurs d'hydroconversion.

Le prétraitement de la biomasse lignocellulosique ou d'un ou plusieurs constituants de biomasse lignocellulosique choisis dans le groupe formé par la cellulose, l'hémicellulose et/ou la lignine comprend avantageusement au moins une des étapes suivantes:

a) une étape de séchage et/ou une étape de torréfaction,

b) une étape de broyage.

De préférence, le prétraitement comprend une étape de réduction partielle de la teneur en eau (ou séchage) de biomasse lignocellulosique, suivie d'une étape de réduction de taille des particules jusqu'à atteindre la gamme de taille convenant à la constitution de la suspension biomasse/solvant pour le traitement dans les réacteurs d'hydroconversion.

Dans le cas d'utilisation de bois comme matière première lignocellulosique, le taux d'humidité est d'environ 50% au moment de la coupe de l'arbre dans la forêt. Un séchage naturel à l'air des troncs d'arbre permet de descendre à 30 - 35 % d'humidité environ. Ensuite, les troncs sont broyés grossièrement en plaquettes forestières sous la forme de particules de quelques centimètres (déchiquetage).

Le prétraitement de la charge peut avantageusement se faire de différentes façons.

La biomasse lignocellulosique peut être soumise à une étape de séchage suivie d'une étape de broyage. La biomasse peut également être soumise à une étape de séchage, puis à une étape de torréfaction, puis à une étape de broyage. Les étapes de séchage et de torréfaction peuvent se faire en une seule étape dans le même équipement, suivi d'une étape de broyage. L'étape de broyage peut également intervenir après le séchage et être éventuellement complétée par un broyage complémentaire après la torréfaction. Le prétraitement de la biomasse peut également se limiter à l'étape de broyage.

Le séchage et la torréfaction sont des traitements thermiques différents. Le premier élimine essentiellement l'eau contenu dans la biomasse tandis que le deuxième provoque des modifications de la structure chimique des constituants. La torréfaction peut se définir comme une pyrolyse à température modérée et temps de séjour contrôlé car elle s'accompagne non seulement d'un séchage, mais aussi d'une destruction partielle de la matière lignocellulosique. Les particules de biomasse après torréfaction sont de forme plus sphérique et moins rugueuse créant ainsi moins d'agglomérats lors de la constitution de la suspension. La torréfaction permet ainsi une fluidisation plus homogène dans le lit bouillonnant.

L'étape de séchage est réalisée à une température inférieure à 250°C, de préférence inférieure à 200°C, de préférence pendant 15 à 120 minutes, permettant d'arriver à une teneur en eau de la biomasse à traiter d'environ 5 à 10 %.

L'étape de torréfaction est réalisée à une température comprise entre 200°C et 300°C, de préférence entre 225°C et 275°C, en l'absence d'air de préférence pendant 15 à 120 minutes, permettant d'arriver à une teneur en eau de la biomasse à traiter d'environ 3 à 5 %.

Dans le cas d'une seule étape de séchage/torréfaction dans la même enseigne, la teneur en eau de la biomasse à traiter peut atteindre également 3 à 5 %. Les technologies connues pour le séchage ou la torréfaction sont par exemple le four tournant, le lit mobile, le lit fluidisé, la vis sans fin chauffée, le contact avec de billes métalliques apportant la chaleur. Ces technologies peuvent éventuellement utiliser un gaz circulant à co ou contre courant comme de l'azote ou tout autre gaz inerte dans les conditions de la réaction.

Les particules de biomasse issues des étapes de séchage et/ou torréfaction sont ensuite envoyées dans un broyeur qui permet d'atteindre la granulométrie souhaitée en vue de l'hydroliquéfaction. Le broyage préalable à l'hydroliquéfaction facilite le transport vers la zone réactionnelle et favorise les contacts gaz/liquide/solide.

L'étape de broyage est considérablement facilitée par l'étape de torréfaction qui permet de réduire la consommation énergétique par rapport à un broyage sans torréfaction préalable. Le broyage délivre des particules de biomasse de taille inférieure à 600 microns, de préférence inférieure à 150 microns.

Les étapes de séchage et/ou torréfaction et/ou broyage peuvent être opérées en mode décentralisé près de la production de la biomasse ou en mode centralisé alimentant directement la liquéfaction.

Le prétraitement de la biomasse lignocellulosique comprend de préférence un traitement par torréfaction. Dans le cas de l'hydroliquéfaction de la lignine seule, l'étape de torréfaction n'est pas nécessaire.

Après le prétraitement, on obtient des particules de biomasse lignocellulosique ou d'un ou plusieurs constituants de biomasse lignocellulosique choisis dans le groupe formé par la cellulose, l'hémicellulose et/ou la lignine ayant une humidité de 1 à 50 %, de préférence de 2 à 35 % et encore préférentiellement de 3 à 10 %, ainsi qu'une taille de particules inférieure à 600 microns, de préférence inférieure à 150 microns.

Le prétraitement des algues comprend avantageusement au moins une des étapes suivantes:

a) une étape de déminéralisation,

b) une étape de séchage,

c) une étape de broyage.

De préférence, les algues subissent d'abord une étape de déminéralisation connue par l'homme du métier afin de réduire les sels inorganiques et métaux nocifs aux catalyseurs d'hydroconversion. En fonction de la charge et des conditions opératoires, la déminéralisation permet également de valoriser les alginates, produits utilisés comme épaississants, gélifiants et émulsifiants. Cette étape de déminéralisation consiste à faire passer les algues dans plusieurs solutions ou bains, éventuellement de pH différents. Entre chaque bain, il y a généralement une séparation liquide/solide (décantation, filtration ou centrifugation) plus ou moins grossière qui permet de récupérer les algues dans le milieu aqueux.

Les algues sont d'abord lavées à l'eau douce pour les débarrasser des chlorures et des autres espèces solubles et éventuellement dilacérées. Elles sont ensuite éventuellement macérées quelques heures dans un acide minéral dilué, de préférence de l'acide sulfurique, puis, éventuellement lavées à l'eau douce, éventuellement neutralisées avec une base, de préférence du carbonate de sodium, et éventuellement dilacérées. Éventuellement, les algues sont macérées et dilacérées dans une solution basique concentrée, de préférence une solution de carbonate de sodium, pour former des alginates de sodium qui sont solubles en phase aqueuse. Cette phase aqueuse est ensuite séparée de la phase solide puis acidifié avec un acide minéral, de préférence de l'acide sulfurique afin de faire précipiter l'acide alginique qui peut être facilement récupéré par filtration ou centrifugation par exemple.

La phase solide contenant les algues ainsi prétraitées subit ensuit éventuellement d'autres étapes de prétraitement tandis que les phases aqueuses issues des différentes étapes subissent éventuellement des traitements complémentaires avant leur rejet dans le milieu naturel ou leur recyclage éventuel dans le procédé.

Le prétraitement comprend ensuite préférentiellement une étape de réduction partielle de la teneur en eau (ou séchage) des algues et/ou une étape de réduction de taille des particules jusqu'à atteindre la gamme de taille convenant à la constitution de la suspension algues/solvant pour le traitement dans le ou les réacteurs d'hydroconversion. Ce prétraitement peut avantageusement se faire de différentes façons :

Les algues, après une étape optionnelle de déminéralisation, peuvent être soumises à une étape de séchage suivie d'une étape de broyage. Les algues, notamment les macroalgues, peuvent être soumises à une étape de broyage, suivie d'une étape de séchage. Le prétraitement des algues peut également se limiter à l'étape de broyage.

Le séchage élimine essentiellement l'eau contenu dans les algues. Les technologies connues pour le séchage sont par exemple le four tournant, le lit mobile, le lit fluidisé, la vis sans fin chauffée, le contact avec de billes métalliques apportant !a chaleur. Ces technologies peuvent éventuellement utiliser un gaz circulant à co ou contre courant comme de l'azote ou tout autre gaz inerte dans les conditions de la réaction. D'autres techniques de séchage sont par exemple la floculation assistée par un adjuvant chimique ou physique ou par un champ électromagnétique, la décantation, la centrifugation ou un séchage doux dans des conditions proches du point de vaporisation de l'eau.

L'étape de séchage est réalisée à une température inférieure à 250°C, de préférence inférieure à 200°C, de préférence pendant 15 à 120 minutes, permettant d'arriver à une teneur massique en eau des algues à traiter d'environ 5 à 10 % (humidité).

Les particules d'algues issues des étapes de séchage sont ensuite envoyées dans un broyeur qui permet d'atteindre la granulométrie souhaitée en vue de l'hydroliquéfaction. Le broyage préalable à l'hydroliquéfaction facilite le transport vers la zone réactionnelle et favorise les contacts gaz/liquide/solide.

Le broyage délivre des particules d'algues de taille inférieure à 600 microns, de préférence inférieure à 150 microns.

Les étapes de séchage et/ou broyage peuvent être opérées en mode décentralisé près de la production des algues ou en mode centralisé alimentant directement la liquéfaction.

Après le prétraitement, on obtient des particules d'algues ayant une humidité de 1 à 50 %, de préférence de 2 à 35 % et encore préférentiellement de 3 à 10 %, ainsi qu'une taille de particules inférieure à 600 microns, de préférence inférieure à 150 microns.

Hydroliquéfaction (Hydroconversion):premièreétape

Dans la présente invention, la liquéfaction de la biomasse est réalisée par un processus catalytique d'hydroconversion en au moins deux étapes utilisant des réacteurs de type lit bouillonnant directement connectés en série.

La biomasse, après l'éventuelle étape de prétraitement décrite ci-dessus, est mélangée avec un solvant, de préférence un solvant donneur d'hydrogène comprenant par exemple de la tétraline et/ou des molécules napthéno-aromatiques. Avantageusement, le solvant comprend du distillat sous vide, de préférence du gazole sous vide (VGO), et peut également contenir du distillat atmosphérique tel que du diesel. Le solvant est de préférence un solvant issu d'une étape de séparation effectuée après les deux étapes d'hydroconversion du procédé, ledit solvant étant recyclé en amont des deux étapes d'hydroconversion. Dans le cas d'un co-traitement avec d'autres charges, le solvant peut également être constitué partiellement ou totalement d'une co-charge liquide.

Le mélange biomasse/solvant est une suspension de particules de biomasse dispersée dans ledit solvant, ladite suspension de fines particules solides dans un liquide est également parfois appelée "slurry" selon la terminologie anglo-saxonne. Par souci de simplification on utilisera le terme de suspension par la suite. Pour constituer la suspension, la taille des particules de biomasse est inférieure à 5 mm, de préférence inférieure à 1 mm, de préférence inférieure à 650 microns et encore préférentiellement inférieure à 150 microns. Le ratio massique solvant/biomasseest généralement de 0,1 à 3, de préférence de 0,5 à 2.

Le rôle du solvant donneur d'hydrogène est triple. Primo, il assure la formation d'une suspension (slurry) injectable ou pompable pour introduction dans la première zone réactionnelle d'hydroconversion. Secundo, on observe un effet partiel de solvolyse de la biomasse facilitant les réactions d'hydroconversion par la suite. Tertio, on observe un effet de solvant donneur d'hydrogène, c'est-à-dire un transfert d'hydrogène du solvant vers la charge. Ce transfert d'hydrogène présente donc une source d'hydrogène supplémentaire pour l'indispensable besoin d'hydrogène dans la transformation de biomasse en biocarburants.

Avantageusement, la fraction de produits de conversion ayant un intervalle de distillation compris entre le gazole atmosphérique et le gazole sous vide est recyclée en totalité ou en partie vers l'étape de constitution d'une suspension. Le fait de recycler la totalité ou une partie du VGO issu de l'hydroconversion comme solvant permet d'augmenter le rendement en bases carburants désirées (diesel, kérosène, naphta...). Hormis de son rôle comme solvant,la partie de la coupe VGO recyclée représente également de la matière première pour les réactions d'hydrocraquage dans les deux réacteurs d'hydroconversion.

La suspension est ensuite introduite en bas du premier réacteur d'hydroconversion contenant un lit bouillonnant fonctionnant à courant ascendant de liquide et de gaz et contenant au moins un catalyseur d'hydroconversion. L'apport d'hydrogène nécessaire au fonctionnement peut se faire par l'hydrogène d'appoint et/ou par l'hydrogène recyclé du procédé et/ou d'un autre procédé de raffinage environnant.

**EP 2 348 091 B1**

Le fonctionnement du réacteur catalytique à lit bouillonnant, y compris le recyclage des liquides du réacteur vers le haut au travers du lit de catalyseur agité est généralement bien connu. Les technologies à lits bouillonnants utilisent des catalyseurs supportés, généralement sous forme d'extrudés dont le diamètre est généralement de l'ordre de 1 mm ou inférieur à 1 mm. Les catalyseurs restent à l'intérieur des réacteurs et ne sont pas évacués avec les produits. L'activité catalytique peut être maintenue constante grâce au remplacement en ligne du catalyseur. Il n'est donc pas nécessaire d'arrêter l'unité pour changer le catalyseur usagé, ni d'augmenter les températures de réaction le long du cycle pour compenser la désactivation. De plus, le fait de travailler à des conditions opératoires constantes permet d'obtenir des rendements et des qualités de produits constants le long du cycle. Aussi, du fait que le catalyseur est maintenu en agitation par un recyclage important de liquide, la perte de charge sur le réacteur reste faible et constante, et les exothermes de réaction sont rapidement moyennés sur le lit catalytique, qui est donc presque isotherme et ne nécessite pas l'injection de quenches.

On opère sous une pression de 15 à 25 MPa, de préférence de 16 à 20 MPa, à une température d'environ 300°C à 440°C, de préférence entre 325°C à 375°C pour le premier réacteur et entre 350°C et 470°C,de préférence entre 350 et 425°C pour le second, et à une vitesse massique horaire comprise entre 0,1 à 5 h$^{-1}$. La quantité d'hydrogène mélangé à la charge est d'environ 0.1 à 2 normaux mètres cubes (Nm$^3$) par kg de charge et le plus souvent d'environ 0.1 à environ 0.5 Nm$^3$/kg.Après la première étape, la conversion de la charge est comprise entre 30 et 100 %, de préférence entre 50 et 99%. Après la première étape, la déoxygénation de la charge est comprise entre 30 et 100 %, de préférence entre 50 et 99%.

La suspension est introduite dans le premier réacteur qui est maintenu à des conditions de température et de pression sélectionnées et en présence de particules d'un catalyseur d'hydroconversion. La température du réacteur dans cette première étape d'hydroconversion est moins élevée que celle de la deuxième étape d'hydroconversion. Le choix des conditions opératoires, et notamment le choix d'une température entre 300°C à 440°C, de préférence entre 325 à 375°C, permet l'hydrogénation et la liquéfaction de la biomasse à un niveau de conversion déjà très élevé et permet simultanément l'hydrogénation du solvant. Le niveau de température modéré limite le craquage thermique conduisant à la formation de gaz non désirés et limite la condensation des noyaux aromatiques conduisant à la formation de coke non désiré. Ceci minimise la désactivation du catalyseur et prolonge sensiblement la durée de vie effective du catalyseur.

Le type de catalyseur utilisé dans le premier réacteur à lit bouillonnant est décrit ci-après.

Hydroliquéfaction (Hydroconversion) : deuxième étape

Au moins une partie de l'effluent issu de la première étape d'hydroconversion est ensuite injectée dans un deuxième réacteur d'hydroconversion contenant un catalyseur en lit bouillonnant et fonctionnant à courant ascendant de liquide et de gaz et contenant au moins un catalyseur d'hydroconversion. L'effluent est mélangé avec de l'hydrogène supplémentaire qui peut être de l'hydrogène d'appoint et/ou de recyclage du procédé de liquéfaction et/ou d'un autre procédé de raffinage environnant. Ce réacteur, qui fonctionne de façon similaire au réacteur de l'étape (1) est utilisé à une température au moins environ 10°C plus élevée que celle du réacteur de l'étape (1). L'augmentation de la température dans le deuxième réacteur peut se faire par l'apport d'hydrogène chaud (frais ou recyclé). Généralement, on opère à une température d'environ 350°C à 470°C et de préférence 350°C à 425°C. La pression du réacteur de l'étape (2) est de 0,1 à 1 MPa plus faible que pour le réacteur de l'étape (1) pour permettre l'écoulement d'au moins une partie de l'effluent issue de l'étape(1)sans qu'un pompage soit nécessaire. Le catalyseur utilisé dans l'étape (2) peut être identique à celui de l'étape (1).

On opère sous une pression de 15 à 25 MPa, de préférence de 16 à 20 MPa, à une température d'environ 350°C à 470°C, de préférence 350°C à 425°C et à une vitesse massique horaire comprise entre 0.1 à 5 h$^{-1}$.La quantité d'hydrogène mélangé à la charge est d'environ 0.1 à environ 2 normaux mètres cubes (Nm$^3$) par kg de charge et le plus souvent d'environ 0.1 à environ 0.5 N$_m^3$/$_k$g.

Dans le réacteur de l'étape (2), la température plus élevée que celle de la première étape, est sélectionnée pour fournir une conversion catalytique et thermique plus complète de la biomasse non encore convertie. L'hydroconversion de produits liquides issus de la première étape et la conversion thermale de la biomasse en liquides sont accentuées ainsi que les réactions d'hydrodéoxygénation, de décarboxylation, de décarbonylation, d'hydrodésulfuration et d'hydrodéazotation. Les conditions opératoires sont choisies pour minimiser la formation de gaz ou de formation de solides (généralement appelé coke)

Dans le procédé selon l'invention, les conditions opératoires, pour un catalyseur et une charge donnée, sont ajustées en fonction de la conversion totale souhaitée.

Éventuellement, l'effluent obtenu à l'issue de la première étape d'hydroconversion est soumis à une séparation de la fraction légère et au moins une partie, de préférence la totalité, de l'effluent résiduel est traitée dans la deuxième étape d'hydroconversion. Cette séparation est avantageusement faite dans un séparateur inter-étage. La fraction légère contient très majoritairement les composés bouillant au plus à 300°C, voire au plus à 450°C. Cette séparation évite le surcraquage de la fraction légère dans l'étape (2). Elle permet aussi de réduire l'investissement économique sur le réacteur de l'étape (2) (moins de charge à traiter, moins de catalyseur ...) ou d'amener une charge externe sur le réacteur de l'étape (2) ou d'augmenter le temps de séjour dans le réacteur de l'étape (2). L'hydrogène de la fraction légère ainsi séparée peut être recyclé dans le procédé après purification. De manière à améliorer la séparation de la fraction légère, le produit de fond du séparateur inter-étage contenant majoritairement la fraction lourde et éventuellement une partie de la fraction légère, peut être traité dans une étape de distillation sous vide ou d'extraction liquide/liquide ou de strippage haute pression avec de l'hydrogène par exemple.

Bien que le procédé d'hydroliquéfaction en deux étapes d'hydroconversion selon l'invention produise des rendements en bases carburant élevés, un troisième réacteur d'hydroconversion en lit bouillonnant opérant à une température plus élevée que celle du deuxième réacteur peut être envisagé pour certaines charges de biomasse ou de mélange biomasse/co-charge. Dans ce cas, la température du troisième réacteur est au moins 10°C plus élevée que celle du deuxième réacteur. La possibilité d'une séparation inter-étage des gaz effluents s'applique de la même manière en amont de ce troisième réacteur.

Catalyseurs

Dans les deux étapes d'hydroliquéfaction, on peut utiliser tout catalyseur classique d'hydrotraitement et/ou hydroconversion de charges de haut poids moléculaires, notamment un catalyseur granulaire comprenant, sur un support amorphe, au moins un métal ou composé de métal ayant une fonction hydrodéshydrogénante.

Ce catalyseur est avantageusement un catalyseur comprenant au moins un métal du groupe VIII,choisi dans le groupe formé par Ni, Pd, Pt, Co, Rh et/ou Ru, de préférence du nickel et/ou du cobalt, le plus souvent en association avec au moins un métal du groupe VIB, de préférence du molybdène et/ou du tungstène. On emploiera par exemple un catalyseur comprenant de 0,5 à 10 % en poids de nickel et de préférence de 1 à 5 % en poids de nickel (exprimé en oxyde de nickel NiO) et de 1 à 30 % en poids de molybdène, de préférence de 5 à 20 % en poids de molybdène (exprimé en oxyde de molybdène MoO$_3$) sur un support minéral amorphe. Ce support sera, par exemple, choisi dans le groupe formé par l'alumine, la silice, les silices-alumines, la magnésie, les argiles et les mélanges d'au moins deux de ces minéraux. Avantageusement, ce support renferme d'autres composés dopants, notamment des oxydes choisis dans le groupe formé par l'oxyde de bore, la zircone, la cérine, l'oxyde de titane, l'anhydride phosphorique et un mélange de ces oxydes. On utilise le plus souvent un support d'alumine et très souvent un support d'alumine dopée avec du phosphore et éventuellement du bore. La concentration en anhydride phosphorique P$_2$O$_5$ est habituellement comprise entre 0 ou 0.1 % et environ 10% poids. La concentration en trioxyde de bore 8$_2$0$_3$ est habituellement comprise entre 0 ou 0.1 % et environ 10 % en poids. L'alumine utilisée est habituellement une alumine γ ou η.Ce catalyseur est le plus souvent sous forme d'extrudés. La teneur totale en oxydes de métaux des groupes VI et VIII est souvent d'environ 5 à environ 40 % en poids et en général d'environ 7 à 30 % en poids et le rapport pondéral exprimé en oxyde métallique entre métal (ou métaux) du groupe VI sur métal (ou métaux) du groupe VIII est en général d'environ 20 à environ 1 et le plus souvent d'environ 10 à environ 2.

Les catalyseurs des étapes d'hydroconversion de la présente invention peuvent être identiques ou différents dans les réacteurs. De préférence les catalyseurs utilisés sont à base de cobalt-molybdène ou le nickel-molybdène sur alumine.

Préalablement à l'injection de la charge, les catalyseurs utilisés dans le procédé selon la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Dans le cas de charges contenant peu ou pas de soufre telle que des charges d'origine renouvelable ou, dans le cas d'un co-traitement, avec des produits provenant de la synthèse Fischer Tropsch ou tout autre charge contenant peu de soufre (<0,5% m/m), un composé soufré organique (tel que le diméthyldisulfure DMDS ou tout autre polysulfure organique) ou minérale peut avantageusement être injectée en continu ou de façon périodique à l'entrée de la première et/ou de la deuxième étape d'hydroconversion et/ou encore de la troisième étape d'hydroconversion de manière à maintenir les métaux du ou des catalyseurs sous formes sulfures.

Chacun des réacteurs à lit bouillonnant comporte au moins un moyen de soutirage du catalyseur hors dudit réacteur situé à proximité du bas du réacteur et au moins un moyen d'appoint de catalyseur frais dans ledit réacteur situé à proximité du sommet dudit réacteur. L'appoint de catalyseur frais et le soutirage de catalyseur peut éventuellement être réalisé par la même tubulure du moment que ces deux actions ne soient pas simultanées.

Le catalyseur usagé est en partie remplacé par du catalyseur frais (neuf ou régénéré) par soutirage en bas du réacteur et introduction en haut du réacteur de catalyseur frais à intervalle de temps régulier c'est-à-dire par exemple par bouffée ou de façon quasi continue. On peut par exemple introduire du catalyseur frais tous les jours. Le taux de remplacement du catalyseur usagé par du catalyseur frais peut être par exemple d'environ 0,05 kilogramme à environ 10 kilogrammes par tonne de charge. Ce soutirage et ce remplacement sont effectués à l'aide de dispositifs permettant le fonctionnement continu de cette étape d'hydroconversion. L'unité comporte habituellement une pompe de recirculation par réacteur permettant le maintien du catalyseur en lit bouillonnant par recyclage continu d'au moins une partie du liquide soutiré dans la partie supérieure du réacteur et réinjecté en bas du réacteur. Il est également possible d'envoyer le catalyseur usagé soutiré du réacteur dans une zone de régénération dans laquelle on élimine le carbone et le soufre qu'il renferme, puis de renvoyer ce catalyseur régénéré à la première ou à la deuxième ou encore à la troisième étape d'hydroconversion, éventuellement en complément avec du catalyseur frais. Il est également possible d'envoyer le catalyseur usagé soutiré du réacteur dans une zone de réjuvénation dans laquelle on élimine au moins une partie des métaux déposés, avant de régénérer le catalyseur en éliminant le carbone et le soufre qu'il renferme, puis de renvoyer ce catalyseur réjuvéné et régénéré à la première ou à la deuxième ou encore à la troisième étape d'hydroconversion éventuellement en complément avec du catalyseur frais. L'étape de régénération ou de réjuvénation peut éventuellement être précédée d'une étape de stripage permettant l'élimination d'au moins une partie des hydrocarbures soutirés avec le catalyseur. L'étape de régénération peut éventuellement être suivie d'une sulfuration avant d'être renvoyé à ia première, à la deuxième ou à la troisième étape d'hydroconversion.

Il est également possible de transférer en totalité ou en partie le catalyseur usagé soutiré du réacteur de l'étape (1),opérant à plus basse température, directement au réacteur de l'étape (2), opérant à température plus élevée ou de transférer en totalité ou en partie le catalyseur usagé soutiré du réacteur de l'étape (2) directement au réacteur de l'étape (1). Il a été constaté en absence de co-traitement que le catalyseur se désactive moins dans le réacteur opérant à température plus basse que dans le réacteur opérant à température plus élevée, apparemment en raison des températures de fonctionnement plus faibles. Toutefois, dans le cas d'un co-traitement particulier où, la ou les charges ajoutée (s) à l'étape (1) en plus de la charge de type biomasse introduite à l'étape (1), peuvent induire une désactivation plus rapide du catalyseur à l'étape (1) travaillant à plus basse température, un transfert en totalité ou en partie du catalyseur usagé soutiré du réacteur de l'étape (2), opérant à plus haute température, peut être effectué directement au réacteur de l'étape (1). Ce système de cascade du catalyseur permet une durée de vie prolongée du catalyseur. Ce principe est extrapolable au cas de trois réacteurs utilisés en série. L'utilisation de ce principe de cascade de catalyseur permet une meilleure hydrogénation et liquéfaction de la biomasse par tonne de catalyseur frais utilisé ou encore une baisse de la quantité de catalyseur frais nécessaire pour chaque tonne de biomasse liquéfiée. Dans le cas du cascading, le catalyseur du premier et du deuxième réacteur, voire du troisième réacteur, est identique. Les étapes de strippage et/ou réjuvénation et/ou régénération et/ou sulfuration du catalyseur soutiré peuvent éventuellement être intégrées à la mise en oeuvre du cascading de catalyseur entre deux réacteurs d'hydroconversion.

Séparation

Dans le but de produire des bases carburants (naphta, kérosène et/ou diesel), l'effluent obtenu à l'issue de la deuxième étape d'hydroconversion subit de préférence une étape de séparation permettant de séparer une phase gazeuse, une phase aqueuse, au moins une fraction légère d'hydrocarbures liquides de type naphta, kérosène et/ou diesel, une fraction gazole sous vide, une fraction résidu sous vide et une fraction solide qui peut être dans le résidu sous vide.

L'effluent de la deuxième étape d'hydroconversion est avantageusement traité selon les étapes optionnelles suivantes:

L'effluent issu du procédé selon l'invention subit au moins une étape de séparation et de préférence une étape de séparation gaz/liquide et de séparation de la phase aqueuse et d'au moins une base hydrocarbonée liquide, lesdites étapes étant optionnelles et pouvant être mises en oeuvre dans un ordre indifférent l'une par rapport à l'autre. L'étape de séparation peut avantageusement être mise en oeuvre par toute méthode connue de l'homme du métier telle que par exemple la combinaison d'un ou plusieurs séparateurs haute et/ou basse pression, et/ou d'étapes de distillation et/ou de strippage haute et/ou basse pression, et/ou d'étapes d'extraction liquide/liquide, et/ou des étapes de séparation solide/liquide et/ou d'étapes de centrifugations.

De manière préférée, la séparation est effectuée dans une section de fractionnement qui peut d'abord comprendre un séparateur haute pression haute température (HPHT), et éventuellement un séparateur haute pression basse température (HPBT), et/ou une distillation atmosphérique et/ou une distillation sous vide.

Avantageusement, l'effluent issu de l'étape (2) selon l'invention subit d'abord une étape de séparation gaz/liquide. De préférence, l'effluent du deuxième réacteur est séparé dans un séparateur haute pression haute température (HPHT) à partir duquel on récupère une phase vapeur et une phase liquide. La phase vapeur peut être envoyée à un séparateur haute pression basse température (HPBT) via un équipement d'échange thermique à partir duquel on récupère une phase vapeur contenant les gaz ($H_2$, $H_2S$, $NH_3$, $H_2O$, $CO_2$, CO, hydrocarbures C1-C4, ...), une phase aqueuse et une phase liquide. Le séparateur haute pression basse température (HPBT) peut également traiter la phase vapeur issue du séparateur inter-étage (ISS),via un équipement d'échange thermique qui peut être commun à celui traitant la phase vapeur issue du séparateur HPHT.

La phase aqueuse et/ou la phase liquide du séparateur haute pression basse température (HPBT)sont avantageusement détendues dans un ou deux séparateurs basse pression basse température (BPBT) de manière à être au moins partiellement dégazée. Une étape de détente intermédiaire dans un séparateur moyenne pression basse température (MPBT) peut également être envisagée.

De manière alternative, la ou les fraction(s) issue(s) du ou des séparateur(s) HPHT et/ou HPBT et/ou MPBT et/ou BPBT peuvent être envoyées directement, ou en augmentant la pression de ces flux, séparément ou en mélange, à des étapes de raffinage ultérieure telle que l'hydrotraitement ou l'hydrocraquage. Dans le cas où les effluents de la section d'hydroliquéfaction sont traités dans un séparateur HPHT et où la phase vapeur du séparateur HPHT est traité directement dans des étapes de raffinage supplémentaires telles que l'hydrotraitement ou l'hydrocraquage, cette configuration peut être qualifiée de schéma intégré présentant des avantages technico-économiques étant donnée que les flux à haute pression ne nécessiteront pas d'augmentation de pression en vue de leur raffinage supplémentaire.

De manière alternative, la ou les fraction(s) issue(s) du ou des séparateur(s) HPHT et/ou HPBT et/ou MPBT et/ou BPBT peuvent être traitées dans des étapes d'extraction liquide/solide et/ou liquide/liquide et/ou précipitation et/ou de séparation liquide/solide.

Les solides extraits en fond de la distillation sous vide et/ou récupérés lors d'une extraction solide/liquide et/ou liquide/liquide et/ou précipitation et/ou de séparation liquide/solide et/ou de centrifugation peuvent être constitués de charge(s) non convertie(s), de solides produits par réactions non désirées comme le coke, de solides inorganiques présents comme impuretés ou provenant de fines produites par attrition du catalyseur. Ces solides peuvent être retraités, stockés en décharge ou valorisés en subissant différents traitements chimiques et/ou thermiques tels que la gazéification en vue de produire de l'hydrogène ou l'incinération. Ils peuvent aussi servir de combustibles solides, par exemple en four de cimenterie ou pour fournir de l'énergie sur site.

Les gaz extraits du séparateur HPBT subissent un traitement de purification pour récupérer l'hydrogène et le recycler vers les réacteurs d'hydroconversion. Il en est de même pour les effluents gazeux issus des éventuelles unités de traitement ultérieurs tel par exemple l'hydrotraitement et/ou hydrocraquage de coupes hydrocarbonées. On peut également ajouter ia phase gazeuse provenant du séparateur inter-étage. Cette disposition n'est pas obligatoire et le séparateur pourrait ne pas être présent.

La phase aqueuse se compose essentiellement de l'eau étant présente initialement (séchage incomplet) ou étant produite lors des réactions d'hydrodéoxygénation ayant lieu lors de l'hydroliquéfaction ou étant introduite volontairement dans le procédé afin de dissoudre les sels de sulfures d'ammonium formés dans les échangeurs, et des composées oxygénés, notamment des phénols. Les composés oxygénés de la phase aqueuse peuvent être valorisés. D'une manière générale, l'élimination de la phase aqueuse et l'élimination ou la récupération des oxygénés, peuvent être réalisées par toutes les méthodes et techniques connues de l'homme du métier, telles que par exemple par séchage, passage sur un dessicant ou un tamis moléculaire, flash, extraction par solvant, distillation, décantation et filtration sur membrane ou par association d'au moins deux de ces méthodes. La phase aqueuse sera généralement envoyée vers une station de traitement des eaux usées comportant des étapes physico-chimiques et/ou biologiques (boues activées) et/ou des étapes de filtration et/ou d'incinération.

Les phases liquides provenant des séparateurs HPHT, HPLT et éventuellement MPBT et BPBT, sont avantageusement envoyées vers le système de fractionnement. Le système de fractionnement comprend un système de distillation atmosphérique et/ou un système de distillation sous vide pour produire un effluent gazeux, des fractions dites légères issus de la distillation atmosphérique et contenant notamment du naphta, du kérosène et du diesel, une fraction dite lourde issue de la distillation sous vide et contenant du gazole sous vide (VGO) et une fraction résidu sous vide (VR). Les produits obtenus peuvent être intégrés à des pools carburants ou subir des étapes de raffinage supplémentaires incluant un hydrotraitement et/ou hydrocraquage sous haute pression d'hydrogène. Le(s) fraction(s) naphta, kérosène, gazole et VGO peuvent être soumises à un ou plusieurs traitements (hydrotraitement, hydrocraquage, alkylation, isomérisation, reformage catalytique, craquage catalytique ou thermique ou autres) pour les amener aux spécifications requises (teneur en soufre, point de fumée, octane, cétane, etc...) de façon séparée ou en mélange.

La totalité ou une partie de la fraction lourde d'hydrocarbures gazole sous vide (VGO) peut être recyclée en amont de la liquéfaction pour former la suspension avec la biomasse. Le recyclage de cette phase permet une augmentation de la conversion nette en bases carburants de la biomasse. Le recyclage de cette phase, agissant en tant que solvant donneur d'hydrogène, permet également de fournir une partie de l'hydrogène nécessaire à l'hydroliquéfaction. Ce solvant de recyclage peut également contenir une coupe obtenue par distillation atmosphérique, tel que du diesel par exemple. Ce solvant de recyclage peut également être issue d'une étape d'extraction solide/liquide ou liquide/liquide et ainsi être constitués au moins partiellement de composés ayant des points d'ébullition similaires aux composés des distillats atmosphérique ou distillats sous vide. La coupe riche en VGO peut également servir de base pour les fiouls lourds ou les fiouls de soute ou être envoyé à des unités de raffinages, tels que des unités d'hydrocraquage ou de crackage catalytique. La coupe riche en VGO peut également être gazéifiée en vue de produire de l'hydrogène.

Pour le résidu de la distillation sous vide (VR), le point de coupe est généralement choisi de manière à ce que le point d'ébullition initial de la fraction lourde soit d'environ 450°C à environ 550°C. Cette fraction lourde est un solide pouvant être brûlée par la suite ou pouvant alimenter une unité de gazéification pour produire de l'hydrogène et de l'énergie. L'hydrogène ainsi produit peut être introduit dans le procédé d'hydroliquéfaction.

L'étape de séparation est une étape optionnelle. L'effluent issu de l'étape d'hydroconversion (2) peut aussi ne pas subir une telle étape pour produire un brut synthétique (SCO) qui sera traité, après une éventuelle étape d'hydrotraitement pour le stabiliser et une élimination des composés les plus légers (C3-), dans une raffinerie existante. L'étape de séparation peut être simplifiée comme dans le cas du schéma intégré évoqué ci-dessus (sans décompression intermédiaire).

Post-traitement

La valorisation des différentes coupes de bases carburants n'est pas l'objet de la présente invention et ces méthodes sont bien connues de l'Homme du métier. La(les) fraction(s) légère(s)et/ou ia fraction lourde obtenues après séparation peuvent subir une étape d'hydrotraitement et/ou d'hydrocraquage. D'une manière générale, le naphta peut subir un hydrotraitement dans une unité dédiée, ou encore être envoyé à une unité d'hydrocraquage où il est amené aux caractéristiques d'une charge acceptable au reformage catalytique et/ou à l'isomérisation. Le kérosène et le gazole produit peuvent subir un hydrotraitement suivi d'un éventuel hydrocraquage pour être amené aux spécifications (teneur en soufre, point de fumée, cétane, teneur en aromatiques, etc...).

D'une manière générale, l'hydrotraitement et/ou l'hydrocraquage après l'hydroliquéfaction peut se faire soit de façon conventionnelle via une section de séparation classique intermédiaire tel que décrit ci-dessus, soit en intégrant directement la section d'hydrotraitement/hydrocraquage à la section hydroliquéfaction avec ou sans séparation préalable des effluents et sans décompression intermédiaire entre les deux étapes. Au moins une partie de l'effluent obtenu à l'issue de la deuxième étape d'hydroconversion peut subir directement une étape d'hydrotraitement et/ou d'hydrocraquage sans décompression intermédiaire.

Ainsi, dans le procédé selon l'invention, les conversions d'hydroliquéfaction de la biomasse de départ obtenues pour les deux étapes d'hydroconversion sont de l'ordre de 80 à 99,5 %. Le rendement en gaz et liquides valorisables, la fraction C3 - 450°C, est supérieure à 30 %. Les liquéfiats obtenus sont de bonne qualité avec une teneur en oxygène généralement comprise entre 0,1 et 5% en fonction de la sévérité du traitement. Ainsi, le procédé d'hydroliquéfaction directe de biomasse selon l'invention permet par deux étapes d'hydroconversion en lit bouillonnant et un choix de conditions opératoires la production de bases carburants avec un rendement intéressant tout en présentant l'avantage d'un taux de déoxygénation supérieure à 85 %, de préférence 95 %.

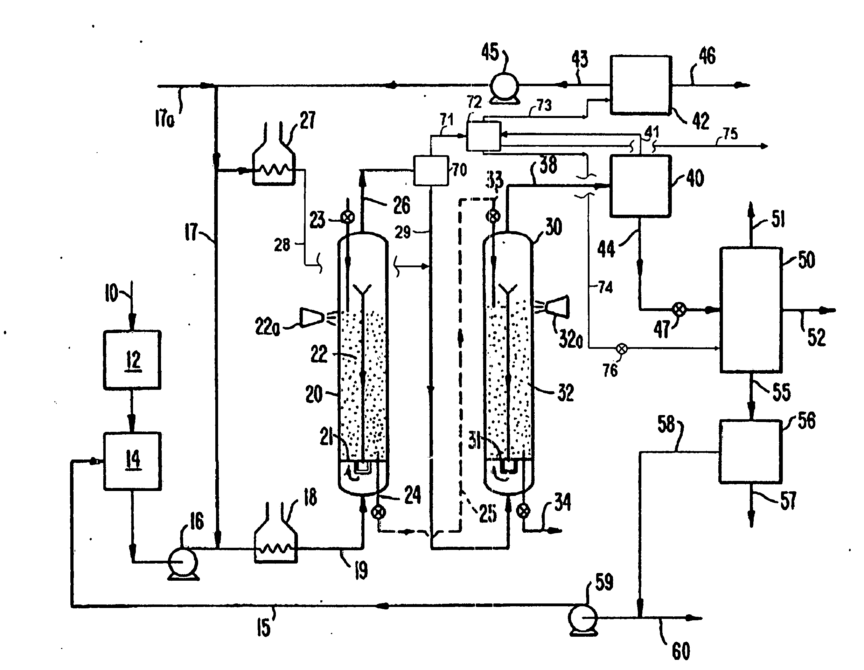

Description de la figure

La figure illustre un mode de réalisation préféré du procédé selon l'invention. On décrit essentiellement l'installation et le procédé selon l'invention. On ne reprendra pas les conditions opératoires décrites précédemment.

La biomasse (10), de préférence préalablement séchée et/ou broyée grossièrement et/ou torréfiée et/ou déminéralisée, est broyée dans le broyeur (12) afin de produire des particules de taille adaptée pour former une suspension et être plus réactive dans les conditions d'hydroliquéfaction. La biomasse est ensuite mise en contact avec le solvant de recyclage (15) issu du procédé dans l'enceinte (14) pour former la suspension. Un composé soufré pour maintenir l'activité catalytique peut être injecté (non représenté) dans la ligne sortant de l'enceinte (14). La suspension est pressurisée par la pompe (16), mélangée avec de l'hydrogène recyclé (17), préchauffée dans l'enceinte (18) et introduite par la conduite (19) en bas du premier réacteur (20) en lit bouillonnant fonctionnant à courant ascendant de liquide et de gaz par le distributeur (21) et contenant au moins un catalyseur d'hydroconversion (22). L'hydrogène peut également être chauffé dans un four indépendant (non représenté) du four (18). L'apport en hydrogène est complété par de l'hydrogène d'appoint (17a). Le niveau supérieur du lit bouillonnant est contrôlé par un capteur de niveau utilisant, par exemple, une source radioactive (22a). L'appoint de catalyseur frais se fait par la ligne (23). Le catalyseur usagé peut être soutiré par la ligne (24) pour être soit éliminé, soit régénéré pour éliminer le carbone et le soufre et/ou réjuvéné pour éliminer les métaux avant son réinjection par la ligne (23). Le catalyseur soutiré par la ligne (24) partiellement usagé peut également être transféré directement par la ligne (25) dans le deuxième réacteur d'hydroconversion (30) (cascading). Ce concept peut aussi être utilisé dans le cas de trois réacteurs en série.

Éventuellement, l'effluent converti (26) issu du réacteur (20) peut être soumis à une séparation de la fraction légère (71) dans un séparateur inter-étage (70).

Tout ou partie de l'effluent issu (26) du premier réacteur d'hydroconversion (20) est avantageusement mélangé avec de l'hydrogène supplémentaire (28), si besoin préalablement préchauffé en (27). Ce mélange est ensuite injecté par la conduite (29) dans un deuxième réacteur d'hydroconversion (30) en lit bouillonnant fonctionnant à courant ascendant de liquide et de gaz par le distributeur (31) et contenant au moins un catalyseur d'hydroconversion (32). Les conditions opératoires,notamment la température, dans ce réacteur sont choisies pour atteindre le niveau de conversion recherché, tel que cela a été préalablement décrit. L'appoint éventuel de catalyseur frais dans ce deuxième réacteur se fait par la ligne (33). L'apport en catalyseur peut se faire de manière périodique ou en continu. Le catalyseur usagé peut être soutiré par la ligne (34) pour être soit éliminé, soit régénéré pour éliminer le carbone et le soufre et/ou réjuvéné pour éliminer les métaux avant son réinjection. Le niveau supérieur du lit bouillonnant est contrôlé par un capteur de niveau utilisant, par exemple, une source radioactive (32a).

L'effluent traité dans le réacteur (30) est envoyé par la ligne (38) dans un séparateur haute pression haute température (HPHT) (40) à partir duquel on récupère une phase vapeur (41) et une phase liquide (44). La phase vapeur (41) est envoyé, optionnellement en mélange avec la phase vapeur (71) issu du séparateur inter-étape optionnel (70) entre les deux réacteurs, généralement via un échangeur (non représenté) ou un aéroréfrigérant pour refroidissement (non représenté) à un séparateur haute pression basse température (HPBT) (72) à partir duquel on récupère une phase vapeur (73) contenant les gaz ($H_2$, $H_2S$, $NH_3$, $H_2O$, $CO_2$, CO, hydrocarbures C1-C4, ...), une phase aqueuse (75) contenant majoritairement de l'eau et des oxygénés, notamment des phénols, et une phase liquide (74).

La phase vapeur (73) du séparateur haute pression basse température (HPBT) (72) est traitée dans l'unité de purification d'hydrogène (42) à partir de laquelle on récupère l'hydrogène (43) pour le recycler via le compresseur (45) aux réacteurs (20) et/ou (30). Les gaz contenant des composés azotés, soufrés et oxygénés indésirables sont évacués de l'installation (flux (46)).

La phase liquide (74) du séparateur haute pression basse température (HPBT) (72) est détendue dans le dispositif (76) puis envoyée vers le système de fractionnement (50). Optionnellement, un séparateur moyenne pression (non représenté) après le détendeur (76) peut être installé pour récupérer une phase vapeur qui est envoyé à l'unité de purification (42) et une phase liquide qui est amenée à la section de fractionnement (50).

La phase liquide (44) issue de la séparation haute pression haute température (HPHT) (40) est détendue dans le dispositif (47) puis envoyée vers le système de fractionnement (50). Il en est de même pour la phase liquide (74) issue du séparateur haute pression basse température (HPBT) (72) et détendue dans le dispositif (76). Bien évidemment, les fractions (74) et (44) peuvent être envoyées ensemble, après détente, au système (50). Le système de fractionnement (50) comprend un système de distillation atmosphérique pour produire un effluent gazeux (51), une fraction dite légère (52) et contenant notamment du naphta, du kérosène et du diesel et une fraction dite lourde (55). Cette fraction lourde (55) est envoyé à une colonne de distillation sous vide (56) pour récupérer une phase solide (57) contenant le résidu sous vide et la biomasse non convertie et une phase liquide (58) contenant du gazole sous vide. Cette fraction solide (57) peut être brûlée par la suite ou peut alimenter une unité de gazéification pour produire de l'hydrogène et de l'énergie. L'hydrogène ainsi produit peut être introduit dans le procédé d'hydroliquéfaction. La phase liquide (58) sert au moins partiellement comme solvant pour la liquéfaction et est recyclée après pressurisation (59) par la conduite (15) à l'enceinte (14) pour être mélangée avec la biomasse. La partie de la phase liquide (58) non utilisée comme solvant est évacuée par la ligne (60).

Exemples

Les exemples suivants ont été réalisés sur deux autoclaves représentatifs du procédé en deux réacteurs en lit bouillonnant. L'utilisation de la tétraline comme solvant donneur est bien connue et peut être assimilée au recyclage d'au moins une partie d'une coupe issue du fractionnement de l'effluent de la section réactionnel.

Exemples 1 : Hydroliquéfaction de biomasse lignocellulosique

Dans un autoclave en acier inox de 500 ml, 72.3 g de biomasse ont été introduits avec 144.8 g de tétraline et 19.1 g de catalyseur NiMo/$Al_2O_3$ présulfuré.

Pour cet essai, la biomasse était du hêtre, préalablement torréfié à 250°C pendant 1 heure, broyé et tamisé de manière à obtenir des particules de taille inférieure à 100 microns (cf. composition simplifiée Tableau 1). Les inorganiques sont essentiellement composés de cendres et de métaux, de traces de chlore et de soufre.

Tableau 1 : composition simplifiée de la charge de hêtre torréfié

| eau | % m/m | 1.7 |
|---|---|---|
| C organique | % m/m | 53.3 |
| H organique | % m/m | 5.6 |
| O organique | % m/m | 38.4 |
| inorganiques | % m/m | 0.9 |

L'autoclave a été fermé et inerté par plusieurs séquences de pressurisations /dépressurisations à l'azote. De l'hydrogène a ensuite été introduit à une pression initiale de 7.5 MPa environ puis l'autoclave a été porté à 350°C et cette température a été maintenue pendant une première étape de 4 h. La pression à cette température a atteint 16 MPa et elle a été maintenue par ajout d'$H_2$ pour compenser la consommation d'$H_2$ pendant la première étape. A la fin de la première étape, l'autoclave a été refroidi puis dépressurisé. Pour la deuxième étape d'hydroconversion, de l'hydrogène a de nouveau été introduit à une pression initiale de 7 MPa puis l'autoclave a été porté à 400°C et cette température a été maintenue pendant une deuxième étape de 4 h. La pression à cette température a atteint 16 MPa et elle a été maintenue par ajout d'$H_2$ pour compenser la consommation d'$H_2$ pendant la deuxième étape.

A la fin de l'essai, l'autoclave a été refroidi puis dépressurisé. La recette obtenue a été filtrée de manière à séparer le liquide et les solides. La fraction solide a été lavée à l'éther, séchée. La masse de solides issus de la biomasse est la différence entre la quantité de solides récupérée (après lavage et séchage) et la masse de catalyseur introduite. La masse de solides issus de la biomasse permet de calculer la conversion de la biomasse introduite selon la formule 1.

Une expérience supplémentaire à partir des mêmes quantités chargées a également été réalisée dans les conditions de la première étape et en s'arrêtant à la première étape de manière à récupérer et analyser la fraction liquide, et à estimer la conversion à l'issue de cette première étape.

Formule 1 : Conversion de la biomasse

$$\text{Conversion} = 100 - (100 \times \text{masse de solides issus de la biomasse} / \text{masse de biomasse introduite})$$

L'application numérique de la formule 1 est présentée dans le Tableau 2.

Tableau 2 : Calcul de la conversion

| étape | | 1 | 2 |
|---|---|---|---|
| charge biomasse initiale | g | 72.3 | |
| solides issus de la biomasse | g | 1.0 | 0.5 |
| conversion | % m/m | 98.6 | 99.3 |

Une analyse élémentaire à été effectuée sur les liquides obtenus (cf. Tableau 3).

Tableau 3 : Analyse élémentaire de la fraction liquide obtenue

| étape | | 1 | 2 |
|---|---|---|---|
| C organique | % m/m | 90.1 | 90.1 |
| H organique | % m/m | 9.5 | 9.7 |
| O organique | % m/m | 0.5 | 0.1 |

Note : la faible différence sur la teneur en hydrogène entre l'étape 1 et l'étape 2 provient du fait que la fraction liquide est fortement diluée dans la tétraline après réaction. De même, à un moindre degré, pour la teneur en oxygène.

A partir de la teneur en oxygène mesurée dans la fraction liquide et de la masse de liquide obtenu, il est possible de calculer la quantité d'oxygène dans le liquide. La quantité d'oxygène organique est calculée à partir de la teneur en oxygène de la charge biomasse (cf. Tableau 1) et de la masse de charge biomasse. Le solvant tétraline est dépourvu d'oxygène. Il est donc possible de calculer un taux de déoxygénation selon la formule 2.

Formule 2: Taux de déoxygénation de la biomasse

$$\text{Taux déoxygénation} = 100 - (100 \times \text{masse d'oxygène fraction liquide} / \text{masse d'oxygène biomasse introduite})$$

L'application numérique de la formule 2 est présentée dans le Tableau 4.

Tableau 4 : Calcul de la déoxygénation

| étape | | 1 | 2 |
|---|---|---|---|
| Charge biomasse | g | 72.3 | |
| O organique charge | % m/m | 38.4 | |
| O organique charge | g | 27.8 | |
| Fraction liquide | g | 159.9 | 158.5 |
| O organique fraction liquide | % m/m | 0.5 | 0.1 |
| O organique fraction liquide | g | 0.8 | 0.2 |
| taux déoxygénation biomasse | % m/m | 97.1 | 99.4 |

La fraction liquide a été distillée de manière à éliminer la tétraline et la décaline (formée par hydrogénation partielle de la tétraline). Les liquides ayant des points d'ébullition strictement inférieurs et strictement supérieurs à la tétraline et la décaline ont été regroupés. La masse de liquide obtenue permet de calculer un rendement de liquides issus de la biomasse par rapport à la masse de biomasse introduite. Le rendement en gaz issus de la biomasse peut être estimé par la différence entre la conversion et le rendement liquide (cf. Tableau 5)

Tableau 5 : Calcul des rendements en liquides et en gaz issus de la biomasse

| étape | | 1 | 2 |
|---|---|---|---|
| Charge biomasse initiale | g | 72.3 | |
| Liquides issus de la biomasse | g | 23.1 | 21.7 |
| Rendement liquides issus de la biomasse | % m/m | 32 | 30 |
| conversion | % m/m | 98.6 | 99.3 |
| Rendements gaz issus de la biomasse | % m/m | 66.6 | 69.3 |

Des analyses ponctuelles ont montrées que ces gaz issus de la biomasse étaient essentiellement des hydrocarbures légers de 1 à 6 atomes de carbone, de l'eau, du monoxyde et du dioxyde de carbone, de l'hydrogène sulfuré et de l'ammoniaque.

Sur le liquide obtenu après élimination du solvant, une analyse élémentaire a été effectuée de manière à déterminer les teneurs en C, H et O (cf. Tableau 6), ainsi qu'une chromatographie en phase gaz permettant d'obtenir une distillation simulée. L'exploitation de la distillation simulée permet d'estimer les sélectivités de différentes coupes présentes dans le liquide issu de la biomasse après élimination du solvant (cf. Tableau 7).

Tableau 6 : Analyse élémentaire du liquide issu de la biomasse après élimination du solvant

| étape | | 1 | 2 |
|---|---|---|---|
| C organique | % m/m | 87.7 | 88.1 |
| H organique | % m/m | 9.1 | 11.0 |
| O organique | % m/m | 3.2 | 0.9 |

Tableau 7 : Sélectivités des coupes liquides issues de la biomasse

| étape | | 1 | 2 |
|---|---|---|---|
| PI-177°C | % m/m | 28 | 38 |
| 177-232°C | % m/m | 10 | 14 |
| 232°C-343°C | % m/m | 22 | 28 |
| 343°C+ | % m/m | 40 | 20 |

Le recyclage du VGO (fraction incluse dans 343°C+) permettra d'augmenter encore le rendement en produits valorisables, notamment en liquides.

Exemples 2 : Hydroliquéfaction d'algues

Dans un autoclave en acier inox de 500 ml, 72 g d'algues verte ont été introduits avec 144 g de tétraline et 18 g de catalyseur $NiMo/Al_2O_3$présulfuré.
Pour cet essai, les algues vertes ont été préalablement séchées à 110°C pendant 2 heure, broyées et tamisées de manière à obtenir des particules de taille inférieure à 100 microns (cf. composition simplifiée Tableau 8). Les inorganiques sont essentiellement composés de cendres, de sels minéraux et de métaux.

Tableau 8 : composition simplifiée de la charge d'algues

| eau | % m/m | 4.6 |
|---|---|---|
| C organique | % m/m | 35.8 |
| H organique | % m/m | 5.9 |
| O organique | % m/m | 36.3 |
| N organique | % m/m | 2.7 |
| S organique | % m/m | 0.2 |
| inorganiques | %m/m | 14.5 |

On procède à l'hydroliquéfaction sous les mêmes conditions opératoires telle que décrite dans l'exemple 1. La masse de solides issus des algues est la différence entre la quantité de solides récupérée (après lavage et séchage) et la masse de catalyseur introduite. La masse de solides issus des algues permet de calculer la conversion des algues introduites selon la formule 1.
Une expérience supplémentaire à partir des mêmes quantités chargées a également été réalisée dans les conditions de la première étape et en s'arrêtant à la première étape de manière à récupérer et analyser la fraction liquide, et à estimer la conversion à l'issue de cette première étape.
L'application numérique de la formule 1 est présentée dans le Tableau 9.

Tableau 9 : Calcul de la conversion

| étape | | 1 | 2 |
|---|---|---|---|
| charge algues initiale | g | 72 | |
| solides issus des algues | g | 16 | 10.5 |
| conversion | % m/m | 77.8 | 85.4 |

Une analyse élémentaire à été effectuée sur les liquides obtenus (cf. Tableau 10).

Tableau 10 : Analyse élémentaire de la fraction liquide obtenue

| étape | | 1 | 2 |
|---|---|---|---|
| C organique | % m/m | 86.9 | 88.8 |
| H organique | % m/m | 10.6 | 11.0 |

(suite)

| étape | | 1 | 2 |
|---|---|---|---|
| O organique | % m/m | 0.9 | 0.2 |

Note : la faible différence sur la teneur en hydrogène entre l'étape 1 et l'étape 2 provient du fait que la fraction liquide est fortement diluée dans la tétraline (et la décaline formé par hydrogénation) après réaction. De même, à un moindre degré, pour la teneur en oxygène. A l'issue de l'étape 1, la somme des teneurs en C, H, O est inférieure à 100 % et cela est notamment attribué à la présence résiduelle d'azote et de soufre.

Le taux de désoxygénation se calcule selon la formule 2. L'application numérique de la formule 2 est présentée dans le Tableau 11.

Tableau 11 : Calcul de la déoxygénation

| étape | | 1 | 2 |
|---|---|---|---|
| Charge algues | g | 72 | |
| O organique charge | % pds/pds | 36.3 | |
| O organique charge | g | 26.1 | |
| Fraction liquide | g | 175 | 178 |
| O organique fraction liquide | % pds/pds | 0.9 | 0.2 |
| O organique fraction liquide | g | 1.6 | 0.4 |
| taux déoxygénation algues | % pds/pds | 93.9 | 98.5 |

La fraction liquide a été distillée de manière à éliminer la tétraline et la décaline (formée par hydrogénation partielle de la tétraline). Les liquides ayant des points d'ébullition strictement inférieurs et strictement supérieurs à la tétraline et la décaline ont été regroupés. La masse de liquide obtenue permet de calculer un rendement de liquides issus des algues par rapport à la masse des algues introduite. Le rendement en gaz issus des algues peut être estimé par la différence entre la conversion et le rendement liquide (cf. Tableau 12)

Tableau 12 : Calcul des rendements en liquides et en gaz issus des algues

| étape | | 1 | 2 |
|---|---|---|---|
| Charge algues initiale | g | 72 | |
| Liquides issus des algues | g | 31.5 | 34.3 |
| Rendement liquides issus des algues | % pds/pds | 43.8 | 47.8 |
| conversion | % pds/pds | 77.8 | 85.4 |
| Rendements gaz issus des algues | % pds/pds | 34.0 | 37.6 |

Des analyses ponctuelles ont montrées que ces gaz issus des algues étaient essentiellement des hydrocarbures légers de 1 à 4 atomes de carbone, de l'eau, du monoxyde et du dioxyde de carbone, de l'hydrogène sulfuré et de l'ammoniaque.

Sur le liquide obtenu après élimination du solvant, une analyse élémentaire a été effectuée de manière à déterminer les teneurs en C, H et O (cf. Tableau 13), ainsi qu'une chromatographie en phase gaz permettant d'obtenir une distillation simulée. L'exploitation de la distillation simulée permet d'estimer les sélectivités de différentes coupes présentes dans le liquide issu des algues après élimination du solvant (cf. Tableau 14). Le recyclage d'une partie de la fraction 177°C+ permettra d'augmenter encore le rendement en une coupe de type essence.

Tableau 13 : Analyse élémentaire du liquide issu des algues après élimination du solvant

| étape | | 1 | 2 |
|---|---|---|---|
| C organique | % pds/pds | 80.4 | 83.3 |
| H organique | % pds/pds | 14.6 | 15.9 |

(suite)

| étape | | 1 | 2 |
|---|---|---|---|
| O organique | % pds/pds | 5.0 | 0.8 |

Tableau 14 : Sélectivités des coupes liquides issues des algues

| étape | | 1 | 2 |
|---|---|---|---|
| PI-177°C | % pds/pds | 94.1 | 92.5 |
| 177°C+ | % pds/pds | 5.9 | 7.5 |

Ces exemples montrent que dans ces conditions, la biomasse peut être convertie en liquides et gaz valorisables. La déoxygénation élevée conduit à des liquides dont la teneur en oxygène est faible et qui sont donc valorisables en bases carburants ou en intermédiaires chimiques après éventuellement des étapes de raffinages supplémentaires et/ou en les mélangeant avec des coupes d'origines pétrolières ou issues du charbon ou issues de synthèse Fischer-Tropsch.

En jouant sur les conditions opératoires, il est possible d'obtenir des sélectivités en gaz et liquides différentes. La présente invention vise à maximiser la sélectivité en liquides ayant une qualité améliorée (faible teneur en oxygène et teneur en hydrogène accrue) par l'utilisation d'au moins deux réacteurs fonctionnant à des températures différentes. Les exemples ont été réalisés en deux étapes et l'élimination de la phase vapeur entre les deux étapes peut être assimilée au rôle du séparateur inter-étage dans l'invention.

## Revendications

1. Procédé d'hydroliquéfaction de biomasse choisie parmi les algues, la biomasse lignocellulosique et/ou un ou plusieurs constituants de biomasse lignocellulosique choisis dans le groupe formé par la cellulose, l'hémicellulose et/ou la lignine pour produire des bases carburants comportant

    a) une étape de constitution d'une suspension des particules de biomasse dans un solvant, de préférence un solvant donneur d'hydrogène

    b) une première étape d'hydroconversion en présence d'hydrogène de ladite suspension dans au moins un réacteur contenant un catalyseur en lit bouillonnant et opérant à une température comprise entre 300°C et 440°C, à une pression totale comprise entre 15 et 25 MPa, à une vitesse massique horaire comprise entre 0,1 et 5 h$^{-1}$ et à un rapport hydrogène/charge compris entre 0,1 et 2 Nm$^3$/kg.

    c) une deuxième étape d'hydroconversion en présence d'hydrogène d'une partie au moins de l'effluent obtenu dans l'étape b) dans au moins un réacteur contenant un catalyseur en lit bouillonnant et opérant à une température comprise entre 350°C et 470°C, à une pression totale comprise entre 15 et 25 MPa, à une vitesse massique horaire comprise entre 0,1 et 5 h$^{-1}$ et à un rapport hydrogène/charge compris entre 0,1 et 2 Nm$^3$/kg,

    et dans lequel, la température de la deuxième étape d'hydroconversion est au moins de 10°C plus élevée que celle de la première étape d'hydroconversion.

2. Procédé selon la revendication 1 dans lequel la première étape d'hydroconversion opère à une température comprise entre 325°C et 375°C et à une pression totale comprise entre 16 et 20 MPa, et dans lequel la deuxième étape d'hydroconversion opère à une température comprise entre 350°C et 425°C et à une pression totale comprise entre 16 et 20 MPa.

3. Procédé selon les revendications 1 ou 2 dans lequel la biomasse lignocellulosique et/ou l'un ou plusieurs constituants de biomasse lignocellulosique choisis dans le groupe formé par la cellulose, l'hémicellulose et/ou la lignine subissent un prétraitement comprenant au moins une des étapes suivantes:

    a) une étape de séchage réalisée à une température inférieure à 250 °C, de préférence inférieure à 200 °C, et/ou une étape de torréfaction, la dite torréfaction est réalisée à une température comprise entre 200 et 300°C, de préférence entre 225°C et 275°C, en l'absence d'air,
    b) une étape de broyage.

4. Procédé selon l'une des revendications 1 ou 2 dans lequel les algues subissent un prétraitement comprenant au moins une des étapes suivantes:

   a) une étape de déminéralisation,
   b) une étape de séchage réalisée à une température inférieure à 250°C, de préférence inférieure à 200 °C,
   c) une étape de broyage.

5. Procédé selon l'une des revendications 1 à 4 dans lequel les particules de biomasse ont une humidité de 1 à 50 %, de préférence de 2 à 35 % et encore préférentiellement de 5 à 10 % et une taille de particules inférieure à 600 microns, de préférence inférieure à 150 microns.

6. Procédé selon l'une des revendications 1 à 5 dans lequel ledit solvant comprend du distillat sous vide, de préférence du gazole sous vide (VGO), et éventuellement du distillat atmosphérique, le ratio massique solvant /biomasse étant de 0,1 à 3, ledit solvant étant de préférence un solvant issu d'une étape de séparation effectuée après les deux étapes d'hydroconversion, ledit solvant étant recyclé en amont des deux étapes d'hydroconversion.

7. Procédé selon l'une des revendications 1 à 6 dans lequel ladite biomasse est co-traitée avec une charge choisie parmi des résidus pétroliers, des pétroles bruts, des bruts synthétiques, des pétroles bruts étêtés, des huiles désasphaltées, des résines de désasphaltage, des asphaltes de désasphaltage, des dérivés de procédés de conversion du pétrole, des sables bitumineux ou leurs dérivés, des schistes bitumineux ou leurs dérivés, des charbons ou des liquéfiats de charbon obtenus par hydroliquéfaction, des déchets hydrocarbonés et/ou polymères industriels, des déchets organiques ou plastiques ménagers, des huiles et graisses végétales ou animales, des goudrons et résidus non ou difficilement valorisables issus de la gazéification de biomasse, charbon ou résidus pétroliers, du charbon de bois, de l'huile de pyrolyse ou des mélanges de telles charges.

8. Procédé selon l'une des revendications 1 à 7 dans lequel ledit catalyseur comprend un métal du groupe VIII choisi dans le groupe formé par le Ni, Pd, Pt, Co, Rh et/ou Ru, optionnellement un métal du groupe VIB choisi dans le groupe Mo et/ou W, sur un support minéral amorphe choisi dans le groupe formé par l'alumine, la silice, les silices-alumines, la magnésie, les argiles et les mélanges d'au moins deux de ces minéraux.

9. Procédé selon l'une des revendications 1 à 8 dans lequel l'effluent obtenu à l'issue de la première étape d'hydroconversion est soumis à une séparation de la fraction légère et au moins une partie, de préférence la totalité, de l'effluent résiduel est traitée dans la deuxième étape d'hydroconversion.

10. Procédé selon l'une des revendications 1 à 9 dans lequel l'effluent obtenu à l'issue de la deuxième étape d'hydroconversion subit une étape de séparation permettant de séparer une phase gazeuse, une phase aqueuse, au moins une fraction légère d'hydrocarbures liquides de type naphta, kérosène et/ou diesel, une fraction lourde d'hydrocarbures gazole sous vide, une fraction résidu sous vide et une fraction solide qui peut être dans le résidu sous vide.

11. Procédé selon la revendication 10 dans lequel la fraction lourde d'hydrocarbures gazole sous vide est recyclée en totalité ou en partie vers l'étape de constitution d'une suspension.

12. Procédé selon la revendication 12 dans lequel au moins partiellement la(les) fraction(s) légère(s) et/ou la fraction lourde obtenue(s) après séparation subissent une étape d'hydrotraitement et/ou d'hydrocraquage.

13. Procédé selon l'une des revendications 1 à 9 dans lequel au moins une partie de l'effluent obtenu à l'issue de la deuxième étape d'hydroconversion subi directement une étape d'hydrotraitement et/ou d'hydrocraquage sans décompression intermédiaire.

14. Procédé selon l'une des revendications 1 à 13 dans lequel le catalyseur usagé de la première étape d'hydroconversion est soutiré en totalité ou en partie directement à la deuxième étape d'hydroconversion ou dans lequel le catalyseur usagé de la deuxième étape d'hydroconversion est soutiré en totalité ou en partie directement à la première étape d'hydroconversion.

**Claims**

1. Process for hydroliquefaction of biomass selected from algae, lignocellulosic biomass and/or of one or more constituents of lignocellulosic biomass selected from the group comprising cellulose, hemicellulose and/or lignin for producing fuel bases comprising

a) a stage of preparation of a suspension of particles of biomass in a solvent, preferably a hydrogen donor solvent

b) a first stage of hydroconversion in the presence of hydrogen of said suspension in at least one reactor containing an ebullating bed catalyst and operating at a temperature comprised between 300°C and 440°C, at a total pressure comprised between 15 and 25 MPa, at an hourly mass velocity comprised between 0.1 and 5 h$^{-1}$ and at a hydrogen/feed ratio comprised between 0.1 and 2 Nm$^3$/kg.

c) a second stage of hydroconversion in the presence of hydrogen of at least a proportion of the effluent obtained in stage b) in at least one reactor containing an ebullating bed catalyst and operating at a temperature comprised between 350°C and 470°C, at a total pressure comprised between 15 and 25 MPa, at an hourly mass velocity comprised between 0.1 and 5 h$^{-1}$ and a hydrogen/feed ratio comprised between 0.1 and 2 Nm$^3$/kg,

and wherein the temperature of the second hydroconversion stage is at least 10°C higher than that of the first hydroconversion stage.

2. Process according to claim 1, **characterized in that** the first hydroconversion stage takes place at a temperature between 325°C and 375°C and at a total pressure comprised between 16 and 20 MPa, and **in that** the second hydroconversion stage takes place at a temperature comprised between 350°C and 425°C and at a total pressure comprised between 16 and 20 MPa.

3. Process according to claims 1 or 2, **characterized in that** the lignocellulosic biomass and/or one or more constituents of the lignocellulosic biomass selected from the group comprising cellulose, hemicellulose and/or lignin undergo a pretreatment comprising at least one of the following stages:

a) a drying stage carried out at a temperature below 250°C, preferably below 200°C, and/or a stage of roasting, said roasting being carried out at a temperature comprised between 200 and 300°C, preferably between 225°C and 275°C, in the absence of air,

b) a grinding stage.

4. Process according to one of claims I or 2, in which the algae are subjected to a pretreatment comprising at least one of the following stages:

a) a demineralization stage,

b) a drying stage carried out at a temperature below 250°C, preferably below 200°C,

c) a grinding stage.

5. Process according to one of claims 1 to 4, **characterized in that** the particles of biomass have a water content of 1 to 50%, preferably 2 to 35% and more preferably 5 to 10% and a particle size less than 600 microns, preferably less than 150 microns

6. Process according to one of claims 1 to 5 **characterized in that** said solvent comprises vacuum distillate, preferably vacuum gas oil (VGO), and optionally atmospheric distillate, the solvent/biomass weight ratio being from 0.1 to 3, said solvent preferably being a solvent obtained from a separation stage carried out after the two hydroconversion stages, said solvent being recycled upstream of the two hydroconversion stages.

7. Process according to one of claims 1 to 6 **characterized in that** said biomass is co-processed with a feed selected from petroleum residues, petroleum crudes, synthetic crudes, topped petroleum crudes, deasphalted oils, resins from deasphalting, asphalts from deasphalting, derivatives from petroleum processing, bituminous sands or their derivatives, bituminous shales or their derivatives, coal or liquefied products obtained from coal by hydroliquefaction, hydrocarbon and/or polymer industrial waste, household organic or plastic waste, vegetable or animal oils and fats, tars and residues that can be upgraded with difficulty or not at all, originating from gasification of biomass, coal or petroleum residues, charcoal, pyrolysis oil or mixtures of said feeds.

8. Process according to one of claims I to 7 **characterized in that** said catalyst comprises a group VIII metal selected from the group comprising Ni, Pd, Pt, Co, Rh and/or Ru, optionally a group VIB metal selected from the group Mo and/or W, on an amorphous mineral support selected from the group comprising alumina, silica, silica-aluminas, magnesia, clays and mixtures of at least two of these minerals.

9. Process according to one of claims 1 to 8 **characterized in that** the effluent obtained at the end of the first hydroconversion stage is subjected to separation of the light fraction and at least a proportion, preferably all, of the residual effluent is treated in the second hydroconversion stage

10. Process according to one of claims 1 to 9 **characterized in that** the effluent obtained at the end of the second hydroconversion stage undergoes a separation stage for separating a gaseous phase, an aqueous phase, at least one light fraction of liquid hydrocarbons of the naphtha, kerosene and/or diesel type, a vacuum gas oil heavy fraction of hydrocarbons, a vacuum residue fraction and a solid fraction that can be in the vacuum residue.

11. Process according to claim 10 **characterized in that** the vacuum gas oil heavy fraction of hydrocarbons is recycled wholly or partly to the stage for preparation of a suspension.

12. Process according to claim 11, **characterized in that** at least partially the light fraction(s) and/or the heavy fraction obtained after separation undergo a hydrotreating and/or hydrocracking stage.

13. Process according to one of claims 1 to 9**characterized in that** at least a proportion of the effluent obtained at the end of the second hydroconversion stage directly undergoes a hydrotreating and/or hydrocracking stage without intermediate decompression.

14. Process according to one of claims 1 to 13 **characterized in that** the spent catalyst from the first hydroconversion stage is withdrawn wholly or partly directly to the second hydroconversion stage or **in that** the spent catalyst from the second hydroconversion stage is withdrawn wholly or partly directly to the first hydroconversion stage.


**Patentansprüche**

1. Verfahren zur Verflüssigung von Biomasse unter Wasserstoffeinsatz, wobei diese aus den Algen, der lignocellulosehaltigen Biomasse und/oder einem oder mehreren Bestandteilen lignocellulosehaltiger Biomasse ausgewählt ist, wobei letztere aus Cellulose, Hemicellulose und/oder Lignin ausgewählt sind, zur Herstellung von Kraftstoffgrundlagen, aufweisend

   a) einen Schritt der Bereitstellung einer Suspension der Biomassepartikel in einem Lösemittel, vorzugsweise einem protischen Lösemittel
   b) einen ersten Schritt der hydrierenden Umwandlung der Suspension in Gegenwart von Wasserstoff in mindestens einem Reaktor, der einen Katalysator im Wirbelbett enthält und bei einer Temperatur im Bereich von 300 °C bis 440 °C, bei einem Gesamtdruck im Bereich von 15 bis 25 MPa, mit einem stundenbezogenen Massendurchsatz im Bereich von 0,1 bis 5$^{-1}$ und mit einem Wasserstoff/Chargen-Verhältnis im Bereich von 0,1 bis 2 Nm$^3$/kg betrieben wird,
   c) einen zweiten Schritt der hydrierenden Umwandlung mindestens eines Teils des Stoffstroms, der in Schritt b) erhalten wurde, in Gegenwart von Wasserstoff in mindestens einem Reaktor, der einen Katalysator im Wirbelbett enthält und bei einer Temperatur im Bereich von 350 °C bis 470 °C, bei einem Gesamtdruck im Bereich von 15 bis 25 MPa, mit einem stundenbezogenen Massendurchsatz im Bereich von 0,1 bis 5$^{-1}$ und mit einem Wasserstoff/Chargen-Verhältnis im Bereich von 0,1 bis 2 Nm$^3$/kg betrieben wird,

   und wobei die Temperatur des zweiten Schrittes der hydrierenden Umwandlung mindestens 10 °C höher als diejenigen des ersten Schrittes der hydrierenden Umwandlung ist.

2. Verfahren nach Anspruch 1, wobei der erste Schritt der hydrierenden Umwandlung bei einer Temperatur im Bereich von 325 °C bis 375 °C und bei einem Gesamtdruck im Bereich von 16 bis 20 MPa betrieben wird und wobei der zweite Schritt der hydrierenden Umwandlung bei einer Temperatur im Bereich von 350 °C bis 425 °C und bei einem Gesamtdruck im Bereich von 15 bis 20 MPa betrieben wird.

3. Verfahren nach den Ansprüchen 1 oder 2, wobei die lignocellulosehaltige Biomasse und/oder der eine oder die mehreren Bestandteile lignocellulosehaltiger Biomasse, welche aus der Gruppe ausgewählt sind, die von Cellulose, Hemicellulose und/oder Lignin gebildet wird, eine Vorbehandlung erfahren, die mindestens einen der folgenden Schritte umfasst:

   a) einen Trocknungsschritt, der bei einer Temperatur von weniger als 250 °C, vorzugsweise von weniger als

22

200 °C durchgeführt wird, und/oder einen Röstschritt, wobei die Röstung bei einer Temperatur im Bereich von 200 bis 300 °C, vorzugsweise von 225 °C bis 275 °C, unter Luftausschluß durchgeführt wird,
b) einen Zerkleinerungsschritt,

4. Verfahren nach einem der Ansprüche 1 oder 2, wobei die Algen eine Vorbehandlung erfahren, die mindestens einen der folgenden Schritte umfasst:

a) einen Entmineralisierungsschritt,
b) einen Trocknungsschritt, der bei einer Temperatur von weniger als 250 °C, vorzugsweise von weniger als 200 °C, durchgeführt wird,
c) einen Zerkleinerungsschritt.

5. Verfahren nach einem der Ansprüche 1 bis 4, wobei die Biomassepartikel eine Feuchtigkeit von 1 bis 50 %, vorzugsweise von 2 bis 35 % und mit noch größerem Vorzug von 5 bis 10 %, und eine Partikelgröße von weniger als 500 Mikrometer, vorzugsweise weniger als 150 Mikrometer, haben.

6. Verfahren nach einem der Ansprüche 1 bis 5, wobei das Lösemittel Vakuumdestillat, vorzugsweise Vakuumgasöl (VGO), und möglicherweise bei Atmosphärendruck gewonnenes Destillat umfasst, wobei das Massenverhältnis Lösemittel/Biomasse 0,1 bis 3 beträgt, wobei es sich bei dem Lösemittel vorzugsweise um ein Lösemittel handelt, das aus einem Abtrennungsschritt stammt, welcher nach den beiden Schritten der hydrierenden Umwandlung durchgeführt wird, wobei das Lösemittel zurückgeführt wird, um stromaufwärts der beiden Schritte der hydrierenden Umwandlung eingeleitet zu werden.

7. Verfahren nach einem der Ansprüche 1 bis 6, wobei die Biomasse gemeinsam mit einer Charge behandelt wird, die aus den Erdölrückständen, den Rohölen, den synthetischen Rohprodukten, den Rohölen nach Entfernung der Leichtfraktionen, den entasphaltierten Ölen, den Harzen aus der Entasphaltierung, den Asphalten aus der Entasphaltierung, den Derivaten aus Erdölumwandlurigsverfahren, den Ölsänden oder deren Derivaten, den Ölschiefern oder deren Derivaten, den Kohlesorten oder den Produkten den Kohleverflüssigung, welche mittels Verflüssigung unter Wasserstoffeinsatz erhalten wurden, den kohlenwasserstoffhaltigen und/oder polymerartigen Industrieabfällen, dem organischen oder kunststoffartigen Anteil des Hausmülls, den pflanzlichen oder tierischen Ölen und Fetten, den Teersorten und Rückständen, die aus der Vergasung von Biomasse, Kohle oder Erdölrückständen stammen und nur schwer oder gar nicht verwertbar sind, aus Holzkohle, aus Pyrolyseöl oder aus Mischungen derartiger Chargen ausgewählt ist.

8. Verfahren nach einem der Ansprüche 1 bis 7, wobei der Katalysator ein Metall der Gruppe VIII umfasst, das aus der Gruppe ausgewählt ist, welche aus Ni, Pd, Pt, Co, Rh und/oder Ru gebildet ist, sowie möglicherweise ein Metall der Gruppe VIB, das aus der Gruppe von Mo und/oder W ausgewählt ist, auf einem amorphen mineralischen Träger, der aus der Gruppe ausgewählt ist, welche aus Aluminiumoxid, Siliciumdioxid, den Siliciumdioxid-Aluminiumoxiden, Magnesia, den Tonen und den Mischungen aus mindestens zweien dieser Mineralstoffe gebildet ist.

9. Verfahren nach einem der Ansprüche 1 bis 8, wobei der Stoffstrom, der nach dem ersten Schritt der hydrierenden Umwandlung erhalten wird, einer Abtrennung der Leichtfraktion unterzogen wird und mindestens ein Teil, vorzugsweise die Gesamtheit, des verbleibenden Stoffstroms im zweiten Schritt der hydrierenden Umwandlung behandelt wird.

10. Verfahren nach einem der Ansprüche 1 bis 9, wobei der Stoffstrom, der nach dem zweiten Schritt der hydrierenden Umwandlung erhalten wird, einen Trennungsschritt erfährt, der es ermöglicht, eine Trennung in eine Gasphase, eine wässrige Phase, mindestens eine Leichtfraktion flüssiger Kohlenwasserstoffe des Typs Naphtha, Kerosin und/oder Diesel, eine Schwerfraktion von Vakuumgasöl-Kohlenwasserstoffen, eine Vakuumrückstandsfraktion, und eine feststoffliche Fraktion, die sich im Vakuumrückstand befinden kann, vorzunehmen.

11. Verfahren nach Anspruch 10, wobei die Schwerfraktion von Vakuumgasöl-Kohlenwasserstoffen vollständig oder teilweise zum Schritt der Bereitstellung einer Suspension zurückgeführt wird.

12. Verfahren nach Anspruch 12, wobei die Leichtfraktion(en) und/oder die Schwerfraktion, die nach der Trennung erhalten wurde(n), mindestens teilweise einen Schritt der Hydrobehandlung und/oder des Hydrocrackens erfahren.

13. Verfahren nach einem der Ansprüche 1 bis 9, wobei mindestens ein Teil des Stoffstroms, der nach dem zweiten Schritt der hydrierenden Umwandlung erhalten wurde, ohne zwischengeschaltete Druckentspannung direkt einen Schritt der Hydrobehandlung und/oder des Hydrocrackens erfahren.

14. Verfahren nach einem der Ansprüche 1 bis 13, wobei der verbrauchte Katalysator des ersten Schrittes der hydrierenden Umwandlung direkt beim zweiten Schritt der hydrierenden Umwandlung vollständig oder teilweise abgezogen wird oder wobei der verbrauchte Katalysator des zweiten Schrittes der hydrierenden Umwandlung direkt beim ersten Schritt der hydrierenden Umwandlung vollständig oder teilweise abgezogen wird.

## RÉFÉRENCES CITÉES DANS LA DESCRIPTION

**Documents brevets cités dans la description**

- US 4420644 A
- CA 851708
- US 20080076945 A
- US 20090218061 A
- US 20090218062 A
- DE 3611340

**Littérature non-brevet citée dans la description**

- **SUZUKI et al.** *Fuel,* 1997, vol. 76 (11), 1043-1048
- *Energy &Fuels,* 2001, vol. 15, 350-355
- **CHIN L.-Y.** Fuels by algae hydrogenation. *Ph.D. thesis,* 1979